(19) Europäisches Patentamt
European Patent Office
Office européen des brevets

(11) **EP 2 448 881 B1**

(12) **FASCICULE DE BREVET EUROPEEN**

(45) Date de publication et mention de la délivrance du brevet:
**25.09.2013 Bulletin 2013/39**

(21) Numéro de dépôt: **10734823.7**

(22) Date de dépôt: **29.06.2010**

(51) Int Cl.:
**C04B 35/486** (2006.01)

(86) Numéro de dépôt international:
**PCT/IB2010/052952**

(87) Numéro de publication internationale:
**WO 2011/001368 (06.01.2011 Gazette 2011/01)**

(54) **ZIRCONE FRITTEE COLOREE**

GEFÄRBTES SINTER-ZIRKONOXID

COLORED SINTERED ZIRCONIA

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **30.06.2009 FR 0954475**

(43) Date de publication de la demande:
**09.05.2012 Bulletin 2012/19**

(73) Titulaire: **Saint-Gobain Centre de Recherches et d'Etudes Européen
92400 Courbevoie (FR)**

(72) Inventeurs:
• **NAHAS, Nabil
F-77700 Serris (FR)**
• **URFFER, Daniel
F-84450 Saint Saturnin Les Avignon (FR)**

(74) Mandataire: **Sartorius, Jérome
Cabinet Nony
3, rue de Penthièvre
75008 Paris (FR)**

(56) Documents cités:
**WO-A-02/081402       US-A- 4 596 750
US-A- 6 136 232**

**Description**

**Domaine technique**

L'invention concerne un mélange particulaire, une pièce frittée obtenue à partir d'un tel mélange particulaire et un procédé de fabrication d'une telle pièce frittée.

**Arrière-plan technologique**

Les pièces frittées à base de zircone sont couramment utilisées pour la fabrication d'articles décoratifs tels que des bijoux, des montres, des bracelets, des broches, des épingles de cravate, des colliers, des sacs à main, des téléphones, du mobilier, ou des ustensiles ménagers.

Pour obtenir une couleur, un pigment peut être ajouté à la zircone. Par exemple, US 2007/270304 décrit un produit de zircone incorporant un pigment présentant une structure spinelle à base de cobalt, de zinc, de fer et d'aluminium. JP 2006-342036, JP 2005-289721 ou EP 0 678 490 fournissent d'autres exemples de pigments.

Le pigment a cependant généralement tendance à se dégrader lors du frittage de la zircone, ce qui peut conduire à une modification difficilement contrôlable de la couleur.

La zircone des articles décoratifs doit en outre présenter une bonne résistance aux éraflures et aux chocs, ainsi qu'un bel aspect avec des couleurs bien développées et homogènes. Elle doit également être biocompatible, c'est-à-dire de ne pas contenir d'éléments pouvant être relargués et qui pourraient être dangereux pour l'homme.

Il existe un besoin permanent pour de nouvelles pièces frittées céramiques à base de zircone présentant ces propriétés et pour des nouveaux procédés de fabrication de telles pièces.

Un but de l'invention est de satisfaire, au moins partiellement, ce besoin.

**Résumé de l'invention**

Selon l'invention, on atteint ce but au moyen d'un mélange particulaire présentant la composition chimique suivante, en pourcentages massiques sur la base des oxydes :

- zircone $ZrO_2$ : complément à 100% ;
- 0,5 à 10,0% d'oxyde(s) de structure pérovskite ;
- 2,0 à 20,0% d'un stabilisant de la zircone choisi dans le groupe formé par $Y_2O_3$, $Sc_2O_3$, MgO, CaO, $CeO_2$ et leurs mélanges, la teneur MgO + CaO étant inférieure à 5,0% ;
- moins de 2,0% d'un additif de frittage choisi dans le groupe formé par $Al_2O_3$, ZnO, $TiO_2$ et leurs mélanges ;
- moins de 2,0% d'autres oxydes,

le ou les oxyde(s) de structure pérovskite et/ou ledit stabilisant et/ou ledit additif de frittage pouvant être remplacés, totalement ou en partie, par une quantité équivalente de précurseur(s) de ces oxydes.

De préférence, le mélange particulaire comporte 0,5 à 10,0% d'oxyde(s) de structure pérovskite.

Les inventeurs ont constaté qu'un mélange particulaire selon l'invention permet de fabriquer, par frittage, une zircone parfaitement adaptée à la fabrication d'articles décoratifs.

Un mélange particulaire selon l'invention peut encore comporter une, voire plusieurs, des caractéristiques optionnelles suivantes :

- l'élément A au site A de la structure pérovskite est sélectionné dans le groupe $G_A(1)$ formé par le calcium Ca, le strontium Sr, le baryum Ba, le lanthane La, le praséodyme Pr, le néodyme Nd, le bismuth Bi, le cérium Ce, et leurs mélanges.
- De préférence, A est sélectionné dans le groupe $G_A(2)$ formé par un mélange de calcium et de lanthane, un mélange de strontium et de lanthane, le calcium, le strontium, le baryum, le lanthane, le praséodyme, le néodyme, le bismuth, le cérium, et leurs mélanges.
- De préférence, A est sélectionné dans le groupe $G_A(3)$ formé par le lanthane, le praséodyme, le bismuth, le cérium, le néodyme et leurs mélanges.
- De préférence, A est le lanthane.
- L'élément B au site B de la structure pérovskite est sélectionné dans le groupe $G_B(1)$ formé par un mélange de cobalt et de fer, un mélange de cobalt et de manganèse, un mélange de cobalt et de chrome, un mélange de cobalt et de nickel, un mélange de chrome et de manganèse, un mélange de chrome et de nickel, un mélange de chrome et de fer, un mélange de manganèse et de fer, un mélange de manganèse et de nickel, un mélange de nickel et de fer, le manganèse, un mélange de cobalt et de titane, un mélange de cobalt et de cuivre, le cobalt, un mélange de chrome et de titane, un mélange de chrome et de cuivre, un mélange de nickel et de titane, le chrome, le nickel, le cuivre, un mélange de magnésium et de fer, un mélange de titane et de fer, le vanadium, le tungstène, le molybdène, un mélange de niobium et de fer, le fer, et leurs mélanges.

- De préférence, B est sélectionné dans le groupe $G_B(2)$ formé par un mélange de cobalt et de fer, un mélange de cobalt et de manganèse, un mélange de chrome et de manganèse, un mélange de chrome et de fer, un mélange de manganèse et de fer, un mélange de cobalt et de chrome et de fer, un mélange de cobalt et de chrome et de fer et de manganèse, un mélange de cobalt et de fer et de manganèse, le manganèse, un mélange de cobalt et de chrome, un mélange de cobalt et de nickel, un mélange de cobalt et de titane, un mélange de cobalt et de cuivre, le cobalt, un mélange de chrome et de nickel, un mélange de chrome et de titane, un mélange de chrome et de cuivre, un mélange de nickel et de fer, un mélange de nickel et de manganèse, un mélange de nickel et de cobalt, un mélange de nickel et de titane, un mélange de nickel et de cobalt et de chrome, un mélange de nickel et de cobalt et de chrome et de manganèse, un mélange de nickel et de chrome et de manganèse, le chrome, le nickel, le cuivre, un mélange de titane et de fer, le vanadium, le tungstène, le molybdène, un mélange de magnésium et de fer, un mélange de niobium et de fer, le fer, un mélange de chrome et de manganèse et de fer.

- De préférence, B est sélectionné dans le groupe $G_B(3)$ formé par un mélange de cobalt et de chrome et de fer, un mélange de cobalt et de chrome et de fer et de manganèse, un mélange de cobalt et de fer et de manganèse, le manganèse, un mélange de cobalt et de chrome, le cobalt, un mélange de chrome et de nickel, un mélange de nickel et de cobalt, un mélange de nickel et de cobalt et de chrome, un mélange de nickel et de cobalt et de chrome et de manganèse, le chrome, le nickel, un mélange de magnésium et de fer, un mélange de titane et de fer, le fer, un mélange de chrome et de fer, un mélange de manganèse et de fer, un mélange de chrome et de manganèse et de fer.

- Le taux de pérovskite dans les « 0,5 à 10% d'oxyde(s) de structure pérovskite et/ou de précurseur(s) de tels oxydes » est supérieur à 90%, de préférence supérieur à 95%, de préférence supérieur à 99%, de préférence sensiblement 100%.

- De manière générale, pour assombrir la couleur, la teneur en oxyde(s) de structure pérovskite et/ou en précurseur (s) de tels oxydes est de préférence supérieure à 3%, de préférence supérieure à 4% et/ou de préférence inférieure à 9%, de préférence inférieure à 6%. Au contraire, de manière générale, pour éclaircir la couleur, la teneur en oxyde (s) de structure pérovskite et/ou en précurseur(s) de tels oxydes est de préférence inférieure à 3%, de préférence inférieure à 2%, de préférence encore inférieure à 1,5%.

- La teneur totale en zircone + stabilisant éventuel est supérieure à 80%, supérieure à 90%, voire supérieure à 95%.

- Le stabilisant de la zircone est choisi dans le groupe formé par $Y_2O_3$, $Sc_2O_3$ et leurs mélanges et la teneur dudit stabilisant de la zircone est inférieure à 8%, de préférence inférieure à 6,5%.

- Le stabilisant de la zircone est choisi dans le groupe formé par MgO, CaO et leurs mélanges et la teneur dudit stabilisant de la zircone est inférieure à 4%.

- Le stabilisant de la zircone est $CeO_2$ et la teneur dudit stabilisant de la zircone est supérieure à 10% et inférieure à 15%.

- Le stabilisant de la zircone est choisi dans le groupe formé par $Y_2O_3$, $CeO_2$ et leurs mélanges, et respecte de préférence la relation $10\% \leq 3.Y_2O_3 + CeO_2 \leq 20\%$.

- Le stabilisant est $Y_2O_3$, c'est-à-dire que le mélange particulaire ne comporte que $Y_2O_3$ comme stabilisant.

- La teneur en $Y_2O_3$ est supérieure à 3%, de préférence supérieure à 4% et/ou inférieure à 8%, de préférence inférieure à 6,5%.

- Le mélange particulaire comporte de la zircone stabilisée avec ledit stabilisant, ou un mélange de particules de zircone, stabilisée ou non, et de particules dudit stabilisant, ou un mélange de particules dans lesquelles de la zircone, stabilisée ou non, et dudit stabilisant sont intimement mélangés. Un tel mélange intime peut par exemple être obtenu par co-précipitation ou atomisation, éventuellement consolidé par un traitement thermique. Dans lesdits mélanges, le stabilisant peut être remplacé par une quantité équivalente de précurseur(s) de ce stabilisant.

- Dans un mode de réalisation préféré, le mélange particulaire comporte des particules dans lesquelles la zircone, stabilisée ou non, du stabilisant et/ou de l'additif de frittage sont intimement mélangés. De préférence, le mélange particulaire comporte des particules dans lesquelles la zircone, stabilisée ou non, du stabilisant et de l'additif de frittage sont intimement mélangés.

- La teneur en additif de frittage est supérieure à 0,1%, de préférence supérieure à 0,2% et/ou inférieure à 1,5%, de préférence inférieure à 1 %, de préférence inférieure à 0,5%.

- L'additif de frittage est $Al_2O_3$ ou un précurseur d'$Al_2O_3$, de préférence l'additif de frittage est $Al_2O_3$.

- Le mélange particulaire ne comporte pas de précurseur de stabilisant et/ou d'additif de frittage.

- Le mélange particulaire présente une taille médiane inférieure à 10 $\mu$m, voire inférieure à 5 $\mu$m, voire inférieure à 3 $\mu$m, voire inférieure à 1 $\mu$m et/ou de préférence supérieure à 0,05 $\mu$m. La taille médiane du mélange particulaire est adaptée au procédé de mise en forme utilisé pour fabriquer la pièce frittée.

- La poudre constituée des particules d'oxyde(s) de structure pérovskite et/ou de précurseur(s) de tels oxydes présente une taille médiane inférieure à 5 $\mu$m, de préférence inférieure à 1 $\mu$m, de préférence inférieure à 0,5 $\mu$m.

Lorsque la couleur noir ou gris est recherchée pour la pièce frittée à fabriquer, A et B peuvent être sélectionnés de la manière suivante :

A peut être sélectionné dans le groupe $G_A$'(1) formé par le calcium (Ca), le strontium (Sr), le baryum (Ba), le lanthane (La), le praséodyme (Pr), le néodyme (Nd), le bismuth (Bi), le cérium (Ce), et leurs mélanges.

De préférence, A est sélectionné dans le groupe $G_A$'(2) formé par un mélange de calcium et de lanthane, un mélange de strontium et de lanthane, le lanthane, et leurs mélanges.

De préférence encore, A est sélectionné dans le groupe $G_A$'(3) formé par le lanthane.

B peut être sélectionné dans le groupe $G_B$'(1) formé par un mélange de cobalt et de fer $Co_x Fe_{1-x}$, avec x compris entre 0,2 et 0,8, un mélange de cobalt et de manganèse $Co_x Mn_{1-x}$, avec x compris entre 0,2 et 0,8, un mélange de cobalt et de chrome $Co_x Cr_{1-x}$, avec x compris entre 0,2 et 0,8, un mélange de cobalt et de nickel $Co_x Ni_{1-x}$, avec x compris entre 0,3 et 0,8, un mélange de chrome et de manganèse $Cr_x Mn_{1-x}$, avec x compris entre 0,2 et 0,7, un mélange de chrome et de nickel $Cr_x Ni_{1-x}$, avec x compris entre 0,3 et 0,7, un mélange de chrome et de fer $Cr_x Fe_{1-x}$, avec x compris entre 0,3 et 0,7, un mélange de manganèse et de fer $Mn_x Fe_{1-x}$, avec x compris entre 0,3 et 0,8, un mélange de manganèse et de nickel $Mn_x Ni_{1-x}$, avec x compris entre 0,3 et 0,8, un mélange de nickel et de fer $Ni_x Fe_{1-x}$, avec x compris entre 0,3 et 0,7, le manganèse, et leurs mélanges.

De préférence, B est sélectionné dans le groupe $G_B$'(2) formé par un mélange de cobalt et de fer $Co_x Fe_{1-x}$, avec x compris entre 0,4 et 0,7, un mélange de cobalt et de manganèse $Co_x Mn_{1-x}$, avec x compris entre 0,4 et 0,6, un mélange de chrome et de manganèse $Cr_x Mn_{1-x}$, avec x compris entre 0,3 et 0,6, un mélange de chrome et de fer $Cr_x Fe_{1-x}$, avec x compris entre 0,4 et 0,6, un mélange de manganèse et de fer $Mn_x Fe_{1-x}$, avec x compris entre 0,4 et 0,6, un mélange de cobalt et de chrome et de fer $Co_x Cr_y Fe_z$, avec x compris entre 0,2 et 0,4, y compris entre 0,2 et 0,4 et z compris entre 0,2 et 0,4 et x+y+z=1, un mélange de cobalt et de chrome et de fer et de manganèse $Co_x Cr_y Fe_z Mn_t$, avec x compris entre 0,1 et 0,4, y compris entre 0,1 et 0,4, z compris entre 0,1 et 0,4 et t compris entre 0,1 et 0,4 et x+y+z+t=1, un mélange de cobalt et de fer et de manganèse $Co_x Fe_y Mn_z$, avec x compris entre 0,2 et 0,4, y compris entre 0,3 et 0,5 et z compris entre 0,2 et 0,4 et x+y+z=1, et le manganèse.

De préférence encore, B est sélectionné dans le groupe $G_B$'(3) formé par un mélange de cobalt et de chrome et de fer $Co_x Cr_y Fe_z$, avec x compris entre 0,2 et 0,4, y compris entre 0,2 et 0,4 et z compris entre 0,2 et 0,4 et x+y+z=1, un mélange de cobalt et de chrome et de fer et de manganèse $Co_x Cr_y Fe_z Mn_t$, avec x compris entre 0,1 et 0,4, y compris entre 0,1 et 0,4, z compris entre 0,1 et 0,4 et t compris entre 0,1 et 0,4 et x+y+z+t=1, un mélange de cobalt et de fer et de manganèse $Co_x Fe_y Mn_z$, avec x compris entre 0,2 et 0,4, y compris entre 0,3 et 0,5 et z compris entre 0,2 et 0,4 et x+y+z=1, et le manganèse.

(R1) : Lorsque la **couleur noir** est recherchée pour la pièce frittée à fabriquer, un mélange particulaire selon l'invention peut en particulier comporter une quantité de poudre d'oxyde(s) de structure pérovskite et/ou de précurseur(s) de tels oxydes supérieure à 3%, de préférence supérieure à 4%, de préférence supérieure à 5%, et/ou inférieure à 6%, A et B étant de préférence choisis dans les groupes $G_A$' et $G_B$' (1) à (3) ci-dessus. En particulier, lorsque la couleur noir est recherchée, un mélange particulaire selon l'invention peut comporter une quantité d'une poudre d'oxyde(s) de structure pérovskite et/ou de précurseur(s) de tels oxydes :

- supérieure à 5% et de préférence inférieure à 6% lorsque l'élément B est $Co_x Fe_{1-x}$, avec x compris entre 0,2 et 0,3 ou x compris entre 0,7 et 0,8,
- supérieure à 4% et de préférence inférieure à 6% lorsque l'élément B est $Co_x Fe_{1-x}$, avec x compris entre 0,3 et 0,4 ou x compris entre 0,6 et 0,7,
- supérieure à 3% et de préférence inférieure à 6% lorsque l'élément B est $Co_x Fe_{1-x}$, avec x compris entre 0,4 et 0,6,
- supérieure à 3% et de préférence inférieure à 6% lorsque l'élément B est $Co_x Mn_{1-x}$, avec x compris entre 0,2 et 0,6,
- supérieure à 4% et de préférence inférieure à 6% lorsque l'élément B est $Co_x Mn_{1-x}$, avec x compris entre 0,6 et 0,7,
- supérieure à 5% et de préférence inférieure à 6% lorsque l'élément B est $Co_x Mn_{1-x}$, avec x compris entre 0,7 et 0,8,
- supérieure à 5% et de préférence inférieure à 6% lorsque l'élément B est $Co_x Cr_{1-x}$, avec x compris entre 0,2 et 0,3 ou x compris entre 0,7 et 0,8,
- supérieure à 4% et de préférence inférieure à 6% lorsque l'élément B est $Co_x Cr_{1-x}$, avec x compris entre 0,3 et 0,4 ou x compris entre 0,6 et 0,7,
- supérieure à 3% et de préférence inférieure à 6% lorsque l'élément B est $Co_x Cr_{1-x}$, avec x compris entre 0,4 et 0,6,
- supérieure à 5% et de préférence inférieure à 6% lorsque l'élément B est $Co_x Ni_{1-x}$, avec x compris entre 0,2 et 0,3 ou x compris entre 0,7 et 0,8,
- supérieure à 4% et de préférence inférieure à 6% lorsque l'élément B est $Co_x Ni_{1-x}$, avec x compris entre 0,3 et 0,4 ou x compris entre 0,6 et 0,7,

- supérieure à 3% et de préférence inférieure à 6% lorsque l'élément B est $Co_x Ni_{1-x}$, avec x compris entre 0,4 et 0,6,
- supérieure à 3% et de préférence inférieure à 6% lorsque l'élément B est $Cr_x Mn_{1-x}$, avec x compris entre 0,2 et 0,6,
- supérieure à 4% et de préférence inférieure à 6% lorsque l'élément B est $Cr_x Mn_{1-x}$, avec x compris entre 0,6 et 0,7,
- supérieure à 4% et de préférence inférieure à 6% lorsque l'élément B est $Cr_x Ni_{1-x}$, avec x compris entre 0,3 et 0,4 ou x compris entre 0,6 et 0,7,
- supérieure à 3% et de préférence inférieure à 6% lorsque l'élément B est $Cr_x Ni_{1-x}$, avec x compris entre 0,4 et 0,6,
- supérieure à 4% et de préférence inférieure à 6% lorsque l'élément B est $Cr_x Fe_{1-x}$, avec x compris entre 0,3 et 0,4 ou x compris entre 0,6 et 0,7,
- supérieure à 3% et de préférence inférieure à 6% lorsque l'élément B est $Cr_x Fe_{1-x}$, avec x compris entre 0,4 et 0,6,
- supérieure à 4% et de préférence inférieure à 6% lorsque l'élément B est $Mn_x Fe_{1-x}$, avec x compris entre 0,3 et 0,4,
- supérieure à 3% et de préférence inférieure à 6% lorsque l'élément B est $Mn_x Fe_{1-x}$, avec x compris entre 0,4 et 0,8,
- supérieure à 4% et de préférence inférieure à 6% lorsque l'élément B est $Mn_x Ni_{1-x}$, avec x compris entre 0,3 et 0,4,
- supérieure à 3% et de préférence inférieure à 6% lorsque l'élément B est $Mn_x Ni_{1-x}$, avec x compris entre 0,4 et 0,8,
- supérieure à 4% et de préférence inférieure à 6% lorsque l'élément B est $Ni_x Fe_{1-x}$, avec x compris entre 0,3 et 0,4 ou x compris entre 0,6 et 0,7,
- supérieure à 3% et de préférence inférieure à 6% lorsque l'élément B est $Ni_x Fe_{1-x}$, avec x compris entre 0,4 et 0,6.

**(R2)** : Lorsqu'une **couleur gris** est recherchée pour la pièce frittée à fabriquer, un mélange particulier selon l'invention peut en particulier comporter une quantité de poudre d'oxyde (s) de structure pérovskite et/ou de précurseur (s) de tels oxydes inférieure à 3%, de préférence inférieure à 2%, voire inférieure à 1, 5%, A et B étant de préférence choisis dans les groupes $G_A'$ et $G_B'$ (1) à (3) ci- dessus.

(R3) : Lorsque la **couleur bleu** est recherchée pour la pièce frittée à fabriquer, A et B peuvent être sélectionnés de la manière suivante :

A peut être sélectionné dans le groupe $G_A''(1)$ formé par le calcium (Ca), le strontium (Sr), le baryum (Ba), le lanthane (La), le praséodyme (Pr), le néodyme (Nd), le bismuth (Bi), le cérium (Ce), et leurs mélanges.

De préférence, A est sélectionné dans le groupe $G_A''(2)$ formé par un mélange de calcium et de lanthane, un mélange de strontium et de lanthane, le lanthane, et leurs mélanges.

De préférence encore, A est sélectionné dans le groupe $G_A''(3)$ formé par le lanthane.

B peut être sélectionné dans le groupe $G_B''(1)$ formé par un mélange de cobalt et de fer $Co_x Fe_{1-x}$, avec $0,6 \leq x < 1$, un mélange de cobalt et de manganèse $Co_x Mn_{1-x}$, avec $0,6 \leq x < 1$, un mélange de cobalt et de chrome $Co_x Cr_{1-x}$, avec $0,6 \leq x < 1$, un mélange de cobalt et de nickel $Co_x Ni_{1-x}$, avec $0,6 \leq x < 1$, un mélange de cobalt et de titane $Co_x Ti_{1-x}$, avec $0,5 \leq x < 1$, un mélange de cobalt et de cuivre $Co_x Cu_{1-x}$, avec $0,5 \leq x < 1$, le cobalt, et leurs mélanges.

De préférence, B est sélectionné dans le groupe $G_B''(2)$ formé par un mélange de cobalt et de fer $Co_x Fe_{1-x}$, avec $0,8 \leq x < 1$, un mélange de cobalt et de manganèse $Co_x Mn_{1-x}$, avec $0,8 \leq x < 1$, un mélange de cobalt et de chrome $Co_x Cr_{1-x}$, avec $0,8 \leq x < 1$, un mélange de cobalt et de nickel $Co_x Ni_{1-x}$, avec $0,8 \leq x < 1$, un mélange de cobalt et de titane $Co_x Ti_{1-x}$, avec $0,8 \leq x < 1$, un mélange de cobalt et de cuivre $Co_x Cu_{1-x}$, avec $0,8 \leq x < 1$, un mélange de cobalt et de chrome et de fer $Co_x Cr_y Fe_z$, avec x compris entre 0,5 et 0,8, y compris entre 0,1 et 0,4 et z compris entre 0,1 et 0,4 et x+y+z=1, un mélange de cobalt et de chrome et de fer et de manganèse $Co_x Cr_y Fe_z Mn_t$, avec x compris entre 0,5 et 0,7, y compris entre 0,1 et 0,3, z compris entre 0,1 et 0,3 et t compris entre 0,1 et 0,3 et x+y+z+t=1, un mélange de cobalt et de fer et de manganèse $Co_x Fe_y Mn_z$, avec x compris entre 0,5 et 0,8, y compris entre 0,1 et 0,4 et z compris entre 0,1 et 0,4 et x+y+z=1, et le cobalt.

De préférence encore, B est sélectionné dans le groupe $G_B''(3)$ formé par un mélange de cobalt et de chrome $Co_x Cr_{1-x}$, avec $0,8 \leq x < 1$, un mélange de cobalt et de chrome et de fer $Co_x Cr_y Fe_z$, avec x compris entre 0,7 et 0,8, y compris entre 0,1 et 0,2 et z compris entre 0,1 et 0,2 et x+y+z=1, un mélange de cobalt et de chrome et de fer et de manganèse $Co_x Cr_y Fe_z Mn_t$, avec x compris entre 0,5 et 0,7, y compris entre 0,1 et 0,3, z compris entre 0,1 et 0,3 et t compris entre 0,1 et 0,3 et x+y+z+t=1, un mélange de cobalt et de fer et de manganèse $Co_x Fe_y Mn_z$, avec x compris entre 0,7 et 0,8, y compris entre 0,1 et 0,2 et z compris entre 0,1 et 0,2 et x+y+z=1, et le cobalt.

(R4) : Lorsque la couleur **bleu foncé** est recherchée pour la pièce frittée à fabriquer, un mélange particulier selon l'invention peut en particulier comporter une quantité de poudre d'oxyde(s) de structure pérovskite et/ou de précurseur (s) de tels oxydes supérieure à 3%, de préférence supérieure à 4%, de préférence supérieure à 5% et/ou inférieure à 6%, A et B étant de préférence choisis dans les groupes $G_A''$ et $G_B''$ (1) à (3) ci-dessus. En particulier, un mélange particulier selon l'invention peut comporter une quantité d'une poudre d'oxyde(s) de structure pérovskite et/ou de précurseur(s) de tels oxydes :

- supérieure à 3% et inférieure à 5% lorsque l'élément B est $Co_x Fe_{1-x}$, avec x compris entre 0,7 et 0,8,
- supérieure à 3% et inférieure à 4% lorsque l'élément B est $Co_x Fe_{1-x}$, avec x compris entre 0,6 et 0,7,

- supérieure à 3% et de préférence inférieure à 6% lorsque l'élément B est $Co_x Fe_{1-x}$, avec $0,8 \leq x < 1$,
- supérieure à 3% et inférieure à 5% lorsque l'élément B est $Co_x Mn_{1-x}$, avec x compris entre 0,7 et 0,8,
- supérieure à 3% et inférieure à 4% lorsque l'élément B est $Co_x Mn_{1-x}$, avec x compris entre 0,6 et 0,7,
- supérieure à 3% et de préférence inférieure à 6% lorsque l'élément B est $Co_x Mn_{1-x}$, avec $0,8 \leq x < 1$,
- supérieure à 3% et inférieure à 5% lorsque l'élément B est $Co_x Cr_{1-x}$, avec x compris entre 0,7 et 0,8,
- supérieure à 3% et inférieure à 4% lorsque l'élément B est $Co_x Cr_{1-x}$, avec x compris entre 0,6 et 0,7,
- supérieure à 3% et de préférence inférieure à 6% lorsque l'élément B est $Co_x Cr_{1-x}$, avec $0,8 \leq x < 1$,
- supérieure à 3% et inférieure à 5% lorsque l'élément B est $Co_x Ni_{1-x}$, avec x compris entre 0,7 et 0,8,
- supérieure à 3% et inférieure à 4% lorsque l'élément B est $Co_x Ni_{1-x}$, avec x compris entre 0,6 et 0,7,
- supérieure à 3% et de préférence inférieure à 6% lorsque l'élément B est $Co_x Ni_{1-x}$, avec $0,8 \leq x < 1$,

(R5) : Lorsque la couleur **bleu clair** est recherchée pour la pièce frittée à fabriquer, un mélange particulaire selon l'invention peut en particulier comporter une quantité de poudre d'oxyde (s) de structure pérovskite et/ou de précurseur (s) de tels oxydes inférieure à 3%, de préférence inférieure à 2%, de préférence inférieure à 1, 5%, A et B étant de préférence choisis dans les groupes $G_A"$ et $G_B"$ (1) à (3) ci- dessus.

(R6) : Lorsque la couleur **vert** est recherchée pour la pièce frittée à fabriquer, A et B peuvent être sélectionnés de la manière suivante :

A peut être sélectionné dans le groupe $G_A"'(1)$ formé par le calcium (Ca), le strontium (Sr), le baryum (Ba), le lanthane (La), le praséodyme (Pr), le néodyme (Nd), le bismuth (Bi), le cérium (Ce), et leurs mélanges.

De préférence, A est sélectionné dans le groupe $G_A"'(2)$ formé par un mélange de calcium et de lanthane, un mélange de strontium et de lanthane, le lanthane, et leurs mélanges.

De préférence encore, A est sélectionné dans le groupe $G_A"'(3)$ formé par le lanthane.

B peut être sélectionné dans le groupe $G_B"'(1)$ formé par un mélange de chrome et de fer $Cr_x Fe_{1-x}$, avec $0,6 \leq x < 1$, un mélange de chrome et de manganèse $Cr_x Mn_{1-x}$, avec $0,6 \leq x < 1$, un mélange de chrome et de cobalt $Cr_x Co_{1-x}$, avec $0,6 \leq x < 1$, un mélange de chrome et de nickel $Cr_x Ni_{1-x}$, avec $0,6 \leq x < 1$, un mélange de chrome et de titane $Cr_x Ti_{1-x}$, avec $0,5 \leq x < 1$, un mélange de chrome et de cuivre $Cr_x Cu_{1-x}$, avec $0,5 \leq x < 1$, un mélange de nickel et de fer $Ni_x Fe_{1-x}$, avec $0,6 \leq x < 1$, un mélange de nickel et de manganèse $Ni_x Mn_{1-x}$, avec $0,6 \leq x < 1$, un mélange de nickel et de cobalt $Ni_x Co_{1-x}$, avec $0,6 \leq x < 1$, un mélange de nickel et de titane $Ni_x Ti_{1-x}$, avec $0,5 \leq x < 1$, le chrome, le nickel, le cuivre et leurs mélanges.

De préférence, B est sélectionné dans le groupe $G_B"'(2)$ formé par un mélange de chrome et de fer $Cr_x Fe_{1-x}$, avec $0,8 \leq x < 1$, un mélange de chrome et de manganèse $Cr_x Mn_{1-x}$, avec $0,8 \leq x < 1$, un mélange de chrome et de cobalt $Cr_x Co_{1-x}$, avec $0,8 \leq x < 1$, un mélange de chrome et de nickel $Cr_x Ni_{1-x}$, avec $0,8 \leq x < 1$, un mélange de chrome et de titane $Cr_x Ti_{1-x}$, avec $0,8 \leq x < 1$, un mélange de chrome et de cuivre $Cr_x Cu_{1-x}$, avec $0,8 \leq x < 1$, un mélange de nickel et de fer $Ni_x Fe_{1-x}$, avec $0,8 \leq x < 1$, un mélange de nickel et de manganèse $Ni_x Mn_{1-x}$, avec $0,6 \leq x < 1$, un mélange de nickel et de cobalt $Ni_x Co_{1-x}$, avec $0,8 \leq x < 1$, un mélange de nickel et de titane $Ni_x Ti_{1-x}$, avec $0,8 \leq x < 1$, un mélange de chrome et de cobalt et de fer $Cr_x Co_y Fe_z$, avec x compris entre 0,5 et 0,7, y compris entre 0,2 et 0,4 et z compris entre 0,1 et 0,3 et x+y+z=1, un mélange de chrome et de cobalt et de fer et de manganèse $Cr_x Co_y Fe_z Mn_t$, avec x compris entre 0,5 et 0,6, y compris entre 0,2 et 0,3, z compris entre 0,1 et 0,3 et t compris entre 0,1 et 0,3 et x+y+z+t=1, un mélange de chrome et de fer et de manganèse $Cr_x Fe_y Mn_z$, avec x compris entre 0,6 et 0,8, y compris entre 0,1 et 0,3 et z compris entre 0,1 et 0,4 et x+y+z=1, un mélange de nickel et de cobalt et de chrome $Ni_x Co_y Cr_z$, avec x compris entre 0,5 et 0,8, y compris entre 0,1 et 0,4 et z compris entre 0,1 et 0,4 et x+y+z=1, un mélange de nickel et de cobalt et de chrome et de manganèse $Ni_x Co_y Cr_z Mn_t$, avec x compris entre 0,5 et 0,7, y compris entre 0,1 et 0,3, z compris entre 0,1 et 0,3 et t compris entre 0,1 et 0,3 et x+y+z+t=1, un mélange de nickel et de chrome et de manganèse $Ni_x Cr_y Mn_z$, avec x compris entre 0,5 et 0,8, y compris entre 0,1 et 0,4 et z compris entre 0,1 et 0,4 et x+y+z=1, le chrome, le nickel, le cuivre.

De préférence encore, B est sélectionné dans le groupe $G_B"'(3)$ formé par un mélange de un mélange de chrome et de cobalt $Cr_x Co_{1-x}$, avec $0,8 \leq x < 1$, un mélange de chrome et de nickel $Cr_x Ni_{1-x}$, avec $0,8 \leq x < 1$, un mélange de nickel et de cobalt $Ni_x Co_{1-x}$, avec $0,8 \leq x < 1$, un mélange de chrome et de cobalt et de fer $Cr_x Co_y Fe_z$, avec x compris entre 0,5 et 0,7, y compris entre 0,2 et 0,4 et z compris entre 0,1 et 0,3 et x+y+z=1, un mélange de nickel et de cobalt et de chrome $Ni_x Co_y Cr_z$, avec x compris entre 0,5 et 0,8, y compris entre 0,1 et 0,4 et z compris entre 0,1 et 0,4 et x+y+z=1, un mélange de nickel et de cobalt et de chrome et de manganèse $Ni_x Co_y Cr_z Mn_t$, avec x compris entre 0,5 et 0,7, y compris entre 0,1 et 0,3, z compris entre 0,1 et 0,3 et t compris entre 0,1 et 0,3 et x+y+z+t=1, le chrome, le nickel.

(R7) : Lorsque la couleur **vert foncé** est recherchée pour la pièce frittée à fabriquer, un mélange particulaire selon l'invention peut en particulier comporter une quantité de poudre d'oxyde(s) de structure pérovskite et/ou de précurseur (s) de tels oxydes supérieure à 3%, de préférence supérieure à 4%, de préférence supérieure à 5% et/ou inférieure à 6%, A et B étant de préférence choisis dans les groupes $G_A'''$ et $G_B'''$ (1) à (3) ci-dessus. En particulier, un mélange particulaire selon l'invention peut comporter une quantité d'une poudre d'oxyde(s) de structure pérovskite et/ou de précurseur(s) de tels oxydes :

- supérieure à 3% et inférieure à 4% lorsque l'élément B est $Cr_x Fe_{1-x}$, avec x compris entre 0,6 et 0,7,
- supérieure à 3% et de préférence inférieure à 6% lorsque l'élément B est $Cr_x Fe_{1-x}$, avec $0,7 \leq x < 1$,
- supérieure à 3% et inférieure à 4% lorsque l'élément B est $Cr_x Mn_{1-x}$, avec x compris entre 0,6 et 0,7,
- supérieure à 3% et inférieure à 6% lorsque l'élément B est $Cr_x Mn_{1-x}$, avec $0,7 \leq x < 1$, de préférence
- supérieure à 3% et inférieure à 5% lorsque l'élément B est $Cr_x Co_{1-x}$, avec x compris entre 0,7 et 0,8,
- supérieure à 3% et inférieure à 4% lorsque l'élément B est $Cr_x Co_{1-x}$, avec x compris entre 0,6 et 0,7,
- supérieure à 3% et de préférence inférieure à 6% lorsque l'élément B est $Cr_x Co_{1-x}$, avec $0,8 \leq x < 1$,
- supérieure à 3% et inférieure à 4% lorsque l'élément B est $Cr_x Ni_{1-x}$, avec x compris entre 0,6 et 0,7,
- supérieure à 3% et de préférence inférieure à 6% lorsque l'élément B est $Cr_x Ni_{1-x}$, avec $0,7 \leq x < 1$,
- supérieure à 3% et inférieure à 4% lorsque l'élément B est $Ni_x Fe_{1-x}$, avec x compris entre 0,6 et 0,7,
- supérieure à 3% et inférieure à 6% lorsque l'élément B est $Ni_x Fe_{1-x}$, avec $0,7 \leq x < 1$, de préférence
- supérieure à 3% et inférieure à 4% lorsque l'élément B est $Ni_x Mn_{1-x}$, avec x compris entre 0,6 et 0,7,
- supérieure à 3% et de préférence inférieure à 6% lorsque l'élément B est $Ni_x Mn_{1-x}$, avec $0,7 \leq x < 1$,
- supérieure à 3% et inférieure à 5% lorsque l'élément B est $Ni_x Cr_{1-x}$, avec x compris entre 0,7 et 0,8,
- supérieure à 3% et inférieure à 4% lorsque l'élément B est $Ni_x Cr_{1-x}$, avec x compris entre 0,6 et 0,7,
- supérieure à 3% et de préférence inférieure à 6% lorsque l'élément B est $Ni_x Cr_{1-x}$, avec $0,8 \leq x < 1$.

(R8) : Lorsque la couleur **vert clair** est recherchée pour la pièce frittée à fabriquer, un mélange particulaire selon l'invention peut en particulier comporter une quantité de poudre d'oxyde (s) de structure pérovskite et/ou de précurseur (s) de tels oxydes inférieure à 3%, de préférence inférieure à 2%, de préférence inférieure à 1, 5%, A et B étant de préférence choisis dans les groupes $G_A'''$ et $G_B'''$ (1) à (3) ci- dessus.

(R9) : Lorsque la couleur **jaune** est recherchée pour la pièce frittée à fabriquer, A et B peuvent être sélectionnés de la manière suivante :

A peut être sélectionné dans le groupe $G_A 4'(1)$ formé par le calcium (Ca), le strontium (Sr), le baryum (Ba), le lanthane (La), le praséodyme (Pr), le néodyme (Nd), le bismuth (Bi), le cérium (Ce), et leurs mélanges.

De préférence, A est sélectionné dans le groupe $G_A^{4'}(2)$ formé par le calcium (Ca), le strontium (Sr), le baryum (Ba), le lanthane (La), le praséodyme (Pr), le bismuth (Bi), le cérium (Ce), et leurs mélanges.

De préférence encore, A est sélectionné dans le groupe $G_A^{4'}(3)$ formé par le lanthane (La), le praséodyme (Pr), le bismuth (Bi), le cérium (Ce), et leurs mélanges.

B peut être sélectionné dans le groupe $G_B^{4'}(1)$ formé par un mélange de magnésium et de fer $Mg_x Fe_{1-x}$, avec $0,8 \leq x < 1$ et seulement si A est choisi parmi le praséodyme (Pr), le bismuth (Bi), le cérium (Ce), et leurs mélanges, un mélange de titane et de fer $Ti_x Fe_{1-x}$, avec $0,8 \leq x < 1$ et seulement si A est choisi parmi le praséodyme (Pr), le bismuth (Bi), le cérium (Ce), et leurs mélanges, le tungstène, le vanadium et le molybdène, et leurs mélanges.

De préférence, B est sélectionné dans le groupe $G_B^{4'}(2)$ formé par un mélange de titane et de fer $Ti_x Fe_{1-x}$, avec $0,8 \leq x < 1$ et seulement si A est choisi parmi le praséodyme (Pr), le bismuth (Bi), le cérium (Ce), et leurs mélanges, le tungstène, le vanadium et le molybdène.

(R10) : Lorsque la couleur **jaune** est recherchée pour la pièce frittée à fabriquer, un mélange particulaire selon l'invention peut en particulier comporter une quantité de poudre d'oxyde (s) de structure pérovskite et/ou de précurseur (s) de tels oxydes supérieure à 3%, de préférence supérieure à 4%, et/ou inférieure à 6%, A et B étant de préférence choisis dans les groupes $GA^{4'}$ (1) à (3) et $G_B^{4'}$ (1) à (2) ci- dessus.

(R11) : Lorsque la couleur **orange** est recherchée pour la pièce frittée à fabriquer, A et B peuvent être sélectionnés de la manière suivante :

A peut être sélectionné dans le groupe $G_A^{5'}(1)$ formé par le calcium (Ca), le strontium (Sr), le baryum (Ba), le lanthane (La), le praséodyme (Pr), le néodyme (Nd), le bismuth (Bi), le cérium (Ce), et leurs mélanges.

De préférence, A est sélectionné dans le groupe $G_A^{5'}(2)$ formé par un mélange de calcium et de lanthane, un mélange de strontium et de lanthane, le calcium (Ca), le strontium (Sr), le baryum (Ba), le lanthane (La), le praséodyme (Pr), le bismuth (Bi), le cérium (Ce), et leurs mélanges.

De préférence encore, A est sélectionné dans le groupe $G_A^{5'}(3)$ formé par le lanthane (La), le praséodyme (Pr), le bismuth (Bi), le cérium (Ce), et leurs mélanges. De préférence A est le lanthane (La).

B peut être sélectionné dans le groupe $G_B^{5'}(1)$ formé par un mélange de magnésium et de fer $Mg_x Fe_{1-x}$, avec $0 < x \leq 0,5$, un mélange de titane et de fer $Ti_x Fe_{1-x}$, avec $0 < x \leq 0,5$, un mélange de niobium et de fer $Nb_x Fe_{1-x}$, avec $0 < x \leq 0,5$, un mélange de chrome et de fer $Cr_x Fe_{1-x}$, avec $0 < x \leq 0,4$, un mélange de nickel et de fer $Ni_x Fe_{1-x}$, avec

0 < $x \leq 0,4$, un mélange de manganèse et de fer $Mn_x Fe_{1-x}$, avec 0 < $x \leq 0,4$, le fer et leurs mélanges.

De préférence, B est sélectionné dans le groupe $G_B^{5'}(2)$ formé par un mélange de magnésium et de fer $Mg_x Fe_{1-x}$, avec 0 < $x \leq 0,2$, un mélange de titane et de fer $Ti_x Fe_{1-x}$, avec 0 < $x \leq 0,2$, un mélange de niobium et de fer $Nb_x Fe_{1-x}$, avec 0 < $x \leq 0,2$, un mélange de chrome et de fer $Cr_x Fe_{1-x}$, avec 0 < $x \leq 0,4$, un mélange de manganèse et de fer $Mn_x Fe_{1-x}$, avec 0 < $x \leq 0,4$, un mélange de chrome et de manganèse et de fer $Cr_x Mn_y Fe_z$, avec x compris entre 0,1 et 0,4, y compris entre 0,1 et 0,4 et z compris entre 0,5 et 0,8 et x+y+z=1, et le fer.

De préférence encore, B est sélectionné dans le groupe $G_B^{5'}(3)$ formé par un mélange de magnésium et de fer $Mg_x Fe_{1-x}$, avec 0 < $x \leq 0, 2$, un mélange de titane et de fer $Ti_x Fe_{1-x}$, avec 0 < $x \leq 0, 2$, un mélange de chrome et de fer $Cr_x Fe_{1-x}$, avec 0 < $x \leq 0, 4$, un mélange de manganèse et de fer $Mn_x Fe_{1-x}$, avec 0 < $x \leq 0, 4$, un mélange de chrome et de manganèse et de fer $Cr_x Mn_y Fe_z$, avec x compris entre 0, 1 et 0, 4, y compris entre 0, 1 et 0, 4 et z compris entre 0, 5 et 0, 8 et x+y+z=1, et le fer.

(R12) : Lorsque la couleur **orange clair** est recherchée pour la pièce frittée à fabriquer, un mélange particulier selon l'invention peut en particulier comporter une quantité de poudre d'oxyde (s) de structure pérovskite et/ou de précurseur (s) de tels oxydes inférieure à 3%, de préférence inférieure à 2%, de préférence inférieure à 1, 5%, A et B étant de préférence choisis dans les groupes $G_A^{5'}$ et $G_B^{5'}$ (1) à (3) ci- dessus.

(R13) : Lorsque la couleur **marron foncé** est recherchée pour la pièce frittée à fabriquer, A et B peuvent être sélectionnés de la manière suivante :

A peut être sélectionné dans le groupe $G_A^{6'}(1)$ formé par le calcium (Ca), le strontium (Sr), le baryum (Ba), le lanthane (La), le praséodyme (Pr), le néodyme (Nd), le bismuth (Bi), le cérium (Ce), et leurs mélanges.

De préférence, A est sélectionné dans le groupe $G_A^{6'}(2)$ formé par un mélange de calcium et de lanthane, un mélange de strontium et de lanthane, le lanthane, et leurs mélanges.

De préférence encore, A est sélectionné dans le groupe $G_A^{6'}(3)$ formé par le lanthane.

B peut être sélectionné dans le groupe $G_B^{6'}(1)$ formé par un mélange de chrome et de fer $Cr_x Fe_{1-x}$, avec 0 < $x \leq 0,4$, un mélange de nickel et de fer $Ni_x Fe_{1-x}$, avec 0 < $x \leq 0,4$, un mélange de manganèse et de fer $Mn_x Fe_{1-x}$, avec 0 < $x \leq 0,4$, et leurs mélanges.

De préférence, B est sélectionné dans le groupe $G_B^{6'}(2)$ formé par un mélange de chrome et de fer $Cr_x Fe_{1-x}$, avec 0 < $x \leq 0,4$, un mélange de manganèse et de fer $Mn_x Fe_{1-x}$, avec 0 < $x \leq 0,4$, un mélange de chrome et de manganèse et de fer $Cr_x Mn_y Fe_z$ avec x compris entre 0,1 et 0,4, y compris entre 0,1 et 0,4 et z compris entre 0,5 et 0,8 et x+y+z=1.

(R14) : Lorsque la couleur **marron foncé** est recherchée pour la pièce frittée à fabriquer, un mélange particulier selon l'invention peut en particulier comporter une quantité de poudre d'oxyde(s) de structure pérovskite et/ou de précurseur (s) de tels oxydes supérieure à 3%, de préférence supérieure à 4%, de préférence supérieure à 5% et/ou inférieure à 6%, A et B étant de préférence choisis dans les groupes $G_A^{6'}$ (1) à (3) et $G_B^{6'}(1)$ à (2) ci-dessus. En particulier, un mélange particulier selon l'invention peut comporter une quantité d'une poudre d'oxyde(s) de structure pérovskite et/ou de précurseur(s) de tels oxydes :

- supérieure à 3% et inférieure à 4% lorsque l'élément B est $Cr_x Fe_{1-x}$, avec x compris entre 0,3 et 0,4,
- supérieure à 3% et de préférence inférieure à 6% lorsque l'élément B est $Cr_x Fe_{1-x}$, avec 0 < $x \leq 0,3$,
- supérieure à 3% et inférieure à 4% lorsque l'élément B est $Mn_x Fe_{1-x}$, avec x compris entre 0,3 et 0,4,
- supérieure à 3% et de préférence inférieure à 6% lorsque l'élément B est $Mn_x Fe_{1-x}$, avec 0 < $x \leq 0,3$.

(R15): Lorsque la couleur **rouge** est recherchée pour la pièce frittée à fabriquer, A et B peuvent être sélectionnés de la manière suivante :

A peut être sélectionné dans le groupe $GA^{7'}(1)$ formé par le calcium (Ca), le strontium (Sr), le baryum (Ba), le lanthane (La), le praséodyme (Pr), le néodyme (Nd), le bismuth (Bi), le cérium (Ce), et leurs mélanges.

De préférence, A est sélectionné dans le groupe $GA^{7'}(2)$ formé par le calcium (Ca), le strontium (Sr), le baryum (Ba), le lanthane (La), le praséodyme (Pr), le bismuth (Bi), le cérium (Ce), et leurs mélanges.

De préférence encore, A est sélectionné dans le groupe $GA^{7'}(3)$ formé par le lanthane (La), le praséodyme (Pr), le bismuth (Bi), le cérium (Ce), et leurs mélanges. De préférence A est le lanthane (La).

B peut être sélectionné dans le groupe $G_B^{7'}(1)$ formé par un mélange de magnésium et de fer $Mg_x Fe_{1-x}$, avec 0 < $x \leq 0,5$, un mélange de titane et de fer $Ti_x Fe_{1-x}$, avec 0 < $x \leq 0,5$, un mélange de niobium et de fer $Nb_x Fe_{1-x}$, avec 0 < $x \leq 0,5$, le fer et leurs mélanges.

De préférence, B est sélectionné dans le groupe $G_B^{7'}(2)$ formé par un mélange de magnésium et de fer $Mg_x Fe_{1-x}$, avec 0 < $x \leq 0, 2$, un mélange de titane et de fer $Ti_x Fe_{1-x}$, avec 0 < $x \leq 0, 2$, et le fer. De préférence B est le fer.

(R16) : Lorsque la couleur **rouge** est recherchée pour la pièce frittée à fabriquer, un mélange particulier selon l'invention

peut en particulier comporter une quantité de poudre d'oxyde (s) de structure pérovskite et/ou de précurseur (s) de tels oxydes supérieure à 3%, de préférence supérieure à 4% et/ou de préférence inférieure à 6%, A et B étant de préférence choisis dans les groupes GA$^{7'}$ (1) à (3) et GB$^{7'}$ (1) à (2) ci- dessus.

(R17) : Lorsque la couleur **violet** est recherchée pour la pièce frittée à fabriquer, A et B peuvent être sélectionnés de la manière suivante :

A peut être sélectionné dans le groupe $G_A^{8'}$(1) formé par le calcium (Ca), le strontium (Sr), le baryum (Ba), le lanthane (La), le praséodyme (Pr), le néodyme (Nd), le bismuth (Bi), le cérium (Ce), et leurs mélanges.

De préférence, A est sélectionné dans le groupe $G_A^{8'}$(2) formé par le lanthane (La), le praséodyme (Pr), le néodyme (Nd), le cérium (Ce), et leurs mélanges.

De préférence encore, A est sélectionné dans le groupe $G_A^{8'}$(3) formé par le lanthane (La), le néodyme (Nd), et leurs mélanges.

B peut être un mélange de cobalt et de fer Co$_x$ Fe$_{1-x}$, avec $0 < x \leq 0,4$.

(R18) : Lorsque la couleur **violet foncé** est recherchée pour la pièce frittée à fabriquer, un mélange particulier selon l'invention peut en particulier comporter une quantité de poudre d'oxyde (s) de structure pérovskite et/ou de précurseur (s) de tels oxydes supérieure à 3%, de préférence supérieure à 4% et/ou de préférence inférieure à 6%, A étant de préférence choisis dans les groupes $G_A^{8'}$ (1) à (3) ci- dessus et B étant Co$_x$ Fe$_{1-x}$, avec $0 < x \leq 0,4$. En particulier, un mélange particulier selon l'invention peut comporter une quantité d'une poudre d'oxyde (s) de structure pérovskite et/ou de précurseur (s) de tels oxydes :

- supérieure à 3% et inférieure à 4% lorsque l'élément B est Co$_x$ Fe$_{1-x}$, avec x compris entre 0,3 et 0,4,
- supérieure à 3% et inférieure à 5% lorsque l'élément B est Co$_x$ Fe$_{1-x}$, avec x compris entre 0,2 et 0,3,
- supérieure à 3% et de préférence inférieure à 6% lorsque l'élément B est Co$_x$ Fe$_{1-x}$, avec $0 < x \leq 0,2$.

Les domaines définis ci-dessus pour caractériser les différentes couleurs peuvent se superposer partiellement pour tenir compte des teintes difficiles à classer sans ambiguïté. Par exemple une teinte « gris-bleu » peut être considérée comme de couleur bleu ou de couleur gris.

L'invention concerne aussi un ensemble comportant un mélange particulier selon l'invention et une notice, par exemple sous la forme d'une étiquette apposée sur un conditionnement du mélange particulier ou d'un livret joint au mélange particulier, la notice indiquant que le mélange particulier est destiné à la fabrication de pièces frittées décoratives.

La notice peut par exemple indiquer « *poudre pour céramique décorative* », ou « *poudre pour céramique colorée* ».

Le conditionnement peut être par exemple un sac, par exemple de type « big bag », un bidon ou un fût.

L'invention concerne également un procédé de fabrication d'une pièce frittée comportant les étapes suivantes :

a) mélange de matières premières pour former une charge de départ,
b) mise en forme d'une préforme à partir de ladite charge de départ,
c) frittage de ladite préforme de manière à obtenir ladite pièce frittée, remarquable en ce que la charge de départ comporte un mélange particulier conforme à l'invention.

Dans un mode de réalisation, la charge de départ contient des particules dans lesquelles de la zircone, stabilisée ou non, et du stabilisant et/ou de l'additif de frittage sont intimement mélangés.

On appelle ci-après « poudre de zircone » l'ensemble des particules dont le constituant majoritaire en poids est la zircone.

A l'étape c), la préforme est frittée, de préférence sous air, de préférence à pression atmosphérique ou sous pression (pressage à chaud (« Hot Pressing » en anglais) ou pressage isostatique à chaud (« Hot Isostatic Pressing » en anglais, ou HIP)) et à une température comprise entre 1200°C et 1500°C, de préférence supérieure à 1300°C et/ou inférieure à 1450°C.

L'invention concerne également un procédé pour fabriquer une pièce frittée comportant au moins 70% de zircone, en pourcentage massique sur la base des oxydes, et présentant une couleur déterminée, ce procédé comportant les étapes suivantes :

a') mélange de matières premières pour former une charge de départ,
b') mise en forme d'une préforme à partir de ladite charge de départ,
c') frittage de ladite préforme de manière à obtenir ladite pièce frittée,

et étant remarquable en ce qu'on ajoute, dans la charge de départ, une poudre d'oxyde(s) de structure pérovskite, la quantité et la nature du ou desdits oxyde(s) de structure pérovskite étant déterminées en fonction de ladite couleur, de préférence suivant les règles (R1) à (R18) et leurs variantes définies ci-dessus, le ou les oxyde(s) de structure pérovskite pouvant être remplacés, totalement ou en partie, par une quantité équivalente de précurseur(s) de ces oxydes.

L'adaptation de la charge de départ pour respecter ces règles ne pose pas de difficulté particulière.

Ce procédé peut être notamment mis en oeuvre pour fabriquer un article décoratif selon l'invention.

Les étapes a') à c') peuvent être en particulier des étapes a) à c), respectivement, d'un procédé de fabrication d'une pièce frittée selon l'invention.

L'invention concerne également un procédé pour foncer la couleur d'une pièce frittée selon l'invention, procédé selon lequel

- on augmente, dans la charge de départ destinée à la fabrication de ladite pièce frittée, la quantité d'oxyde(s) de structure pérovskite et/ou de précurseur(s) de tels oxydes, cette quantité étant de préférence supérieure à 3%, de préférence supérieure à 4% et/ou de préférence inférieure à 9%, de préférence inférieure à 6%, et/ou
- on ajoute à la charge de départ destinée à la fabrication de ladite pièce frittée, une quantité d'oxyde(s) de structure pérovskite et/ou de précurseur(s) de tels oxydes, les éléments A et B dudit pérovskite étant choisis dans les groupes $G_{A'}$(1) à (3) et $G_{B'}$(1) à (3) ci-dessus, de préférence en une quantité comprise entre 0,2% et 1 %,

en pourcentage massique sur la base des oxydes de la charge de départ.

L'invention concerne aussi une pièce frittée présentant la composition chimique suivante, en pourcentages massiques sur la base des oxydes :

- zircone $ZrO_2$ : complément à 100% ;
- 0,5 à 10,0% d'oxyde(s) de structure pérovskite ;
- 2,0 à 20,0% d'un stabilisant de la zircone choisi dans le groupe formé par $Y_2O_3$, $Sc_2O_3$, MgO, CaO, $CeO_2$ et leurs mélanges, la teneur MgO + CaO étant inférieure à 5,0% ;
- moins de 2,0% d'un additif de frittage choisi dans le groupe formé par $Al_2O_3$, ZnO, $TiO_2$ et leurs mélanges ;
- moins de 2,0% d'autres oxydes.

L'invention concerne en particulier une pièce frittée obtenue ou susceptible d'être obtenue à partir d'un mélange particulaire selon l'invention, en particulier fabriquée conformément à un procédé de fabrication selon l'invention.

Les inventeurs ont découvert qu'une telle pièce frittée présente un aspect particulièrement adapté pour une utilisation dans un article décoratif lorsque la rugosité Ra de sa surface est inférieure à 0,05 $\mu$m, de préférence inférieure à 0,02 $\mu$m, de préférence encore inférieure à 0,01 $\mu$m, ou est comprise entre 0,1 et 0,5 $\mu$m.

De préférence, cette pièce frittée présente une densité supérieure à 98%, de préférence supérieure à 99%, de préférence supérieure à 99,5% de la densité théorique. Les inventeurs ont en effet découvert qu'une densité élevée conduit avantageusement à un bon développement de la couleur dans la pièce frittée, et à de bonnes propriétés mécaniques.

De préférence, la zircone de cette pièce frittée est constituée pour plus de 80%, de préférence pour plus de 90%, de préférence pour plus de 95%, en volume, de phase quadratique et/ou cubique, le complément à 100% étant constitué de phase monoclinique.

De préférence, la taille médiane des grains de zircone est inférieure à 2 $\mu$m, de préférence inférieure à 1 $\mu$m, voire inférieure à 0,5 $\mu$m.

Le ou les oxydes de structure pérovskite peuvent être tels que A et B appartiennent aux groupes $G_A$ et $G_B$ (1) à (3), comme décrit ci-dessus.

Une pièce frittée selon l'invention peut en particulier être de couleur noir, voire gris, notamment en choisissant A et B dans les groupes $G_{A'}$ et $G_{B'}$ (1) à (3), comme décrit ci-dessus.

Elle peut en particulier présenter les paramètres de couleur suivants, mesurés selon la norme NF ISO 7724 :

- L* < 50 pour la couleur gris, et si la couleur noir est recherchée : L* < 10, de préférence L* < 5, de préférence L* < 1 et/ou
- |a*| < 5, de préférence |a*| < 2, de préférence |a*| < 1, de préférence |a*| < 0,5 et/ou
- |b*| < 5, de préférence |b*| < 2, de préférence |b*| < 1, de préférence |b*| < 0,5.

Une pièce frittée selon l'invention peut également être de couleur bleu, notamment en choisissant A et B dans les groupes $G_A$" et $G_B$" (1) à (3), comme décrit ci-dessus.

Elle peut en particulier présenter les paramètres de couleur suivants, mesurés selon la norme NF ISO 7724 :

- 10 < L* < 30, de préférence 10 < L* < 20 pour la couleur bleu foncé, et si la couleur bleu clair est recherchée : 30 < L* < 70, de préférence 30 < L* < 50, et/ou

- a* < 5, de préférence a* < 0, et/ou
- b* < -10, de préférence b* < -20.

Une pièce frittée selon l'invention peut également être de couleur verte, notamment en choisissant A et B dans les groupes $G_A'''$ et $G_B'''$ (1) à (3), comme décrit ci-dessus.

Elle peut en particulier présenter les paramètres de couleur suivants, mesurés selon la norme NF ISO 7724 :

- 10 < L* < 30 , de préférence 10 < L* < 20 pour la couleur vert foncé, et si la couleur vert clair est recherchée : 30 < L* < 70, de préférence 30 < L* < 50, et/ou
- a* < -5, de préférence a* < -10, et/ou
- b* > 0, de préférence b* > 20.

Une pièce frittée selon l'invention peut également être de couleur jaune, notamment en choisissant A et B dans les groupes $G_A^{4'}$ (1) à (3) et $G_B^{4'}$ (1) à (2), comme décrit ci-dessus.

Elle peut en particulier présenter les paramètres de couleur suivants, mesurés selon la norme NF ISO 7724 :

- 30 < L* < 70, de préférence 30 < L* < 50 pour la couleur jaune clair, et/ou
- |a*| < 5, et/ou
- b* > 10, de préférence b* > 20.

Une pièce frittée selon l'invention peut également être de couleur orange, notamment en choisissant A et B dans les groupes $G_A^{5'}$ et $G_B^{5'}$(1) à (3), comme décrit ci-dessus.

Elle peut en particulier présenter les paramètres de couleur suivants, mesurés selon la norme NF ISO 7724 :

- 30 < L* < 70, de préférence 30 < L* < 50 pour la couleur orange clair, et/ou
- a* > 5, de préférence a* > 10, et/ou
- b* > 10, de préférence b* > 20.

Une pièce frittée selon l'invention peut également être de couleur marron foncé, notamment en choisissant A et B dans les groupes $G_A^{6'}$ (1) à (3) et $G_B^{6'}$ (1) à (2), comme décrit ci-dessus.

Elle peut en particulier présenter les paramètres de couleur suivants, mesurés selon la norme NF ISO 7724 :

- 10 < L* < 30, de préférence 10 < L* < 20, et/ou
- a* > 5, de préférence a* > 10, et/ou
- b* > 10, de préférence b* > 20.

Une pièce frittée selon l'invention peut également être de couleur rouge, notamment en choisissant A et B dans les groupes $G_A^{7'}$ (1) à (3) et et $G_B^{7'}$ (1) à (2), comme décrit ci-dessus.

Elle peut en particulier présenter les paramètres de couleur suivants, mesurés selon la norme NF ISO 7724 :

- 30 < L* < 70, de préférence 30 < L* < 50 pour la couleur rouge clair, et/ou
- a* > 5, de préférence a* > 10, et/ou
- |b*| < 10, de préférence |b*| < 5.

Une pièce frittée selon l'invention peut également être de couleur violet foncé, notamment en choisissant A dans le groupe $G_A^{8'}$ (1) à (3), B étant un mélange de cobalt et de fer $Co_x Fe_{1-x}$, avec $0 < x \leq 0,4$, comme décrit ci-dessus.

Elle peut en particulier présenter les paramètres de couleur suivants, mesurés selon la norme NF ISO 7724 :

- 10 < L* < 30, de préférence 10 < L* < 20, et/ou
- a* > 5, de préférence a* > 10, et/ou
- b* < -5, de préférence b* < -10.

La composition d'une pièce frittée selon l'invention peut être identique à celle d'un mélange particulaire selon l'invention, en ne considérant pas les constituants temporaires, en particulier, en ne considérant que les oxydes. En particulier, la pièce frittée peut présenter les caractéristiques optionnelles suivantes :

- De préférence, la pièce frittée comporte 0,5 à 10,0% d'oxyde(s) de structure pérovskite.

- Le taux de pérovskite dans les oxyde(s) de structure pérovskite est supérieur à 90%, de préférence supérieur à 95%, de préférence supérieur à 99%, de préférence sensiblement 100%.
- La teneur en oxyde(s) de structure pérovskite est supérieure à 3%, de préférence supérieure à 4% et/ou inférieure à 9%, de préférence inférieure à 6%.
- Le stabilisant de la zircone est choisi dans le groupe formé par $Y_2O_3$, $Sc_2O_3$ et leurs mélanges et la teneur dudit stabilisant de la zircone est inférieure à 8%, de préférence inférieure à 6,5%.
- Le stabilisant de la zircone est choisi dans le groupe formé par MgO, CaO et leurs mélanges et la teneur dudit stabilisant de la zircone est inférieure à 4%.
- Le stabilisant de la zircone est $CeO_2$ et la teneur dudit stabilisant de la zircone est supérieure à 10% et inférieure à 15%.
- Le stabilisant de la zircone est choisi dans le groupe formé par $Y_2O_3$, $CeO_2$ et leurs mélanges, et respecte de préférence la relation $10\% \leq 3.Y_2O_3 + CeO_2 \leq 20\%$.
- Le stabilisant est $Y_2O_3$.
- La teneur en $Y_2O_3$ est supérieure à 3%, de préférence supérieure à 4% et/ou inférieure à 8%, de préférence inférieure à 6,5%.
- La teneur en additif de frittage est supérieure à 0,1%, de préférence supérieure à 0,2% et/ou inférieure à 1,5%, de préférence inférieure à 1 %, de préférence inférieure à 0,5%.
- L'additif de frittage est $Al_2O_3$.
- La pièce frittée comporte une quantité de poudre d'oxyde(s) de structure pérovskite supérieure à 3%, de préférence supérieure à 4% et/ou inférieure à 6%, A et B étant de préférence choisis dans les groupes $G_A'$ et $G_B'$ (1) à (3) ci-dessus.
- La pièce frittée comporte une quantité de poudre d'oxyde(s) de structure pérovskite inférieure à 3%, de préférence inférieure à 2%, voire inférieure à 1,5%, A et B étant de préférence choisis dans les groupes $G_A'$ et $G_B'$ (1) à (3), $G_A''$ et $G_B''$ (1) à (3), $G_A'''$ et $G_B'''$ (1) à (3), $G_A^{5'}$ et $G_B^{5'}$ (1) à (3) ci-dessus.

L'invention concerne encore un article choisi dans le groupe formé par un bijou, une montre, un bracelet, un collier, une bague, une broche, une épingle de cravate, un sac à main, un téléphone, un meuble, un ustensile ménager, par exemple un couteau ou un ciseau, une poignée (dans une voiture comme une poignée de porte, un pommeau de levier de vitesse ; dans l'habitat comme une poignée de porte et/ou de fenêtre), un bouton (comme un bouton de manchette, un bouton permettant une action (lève vitre, autoradio, ...), un placage (de tableau de bord de voiture, d'une guitare, ...), une partie visible d'un équipement de bien de consommation (comme par exemple des touches d'ordinateur ou de téléphone, l'enveloppe extérieur (ou casing) d'un ordinateur, ...), une partie de monture de lunettes, voire la monture de lunettes, un article de vaisselle, un cadre (encadrement d'un cadre photo), ledit article comportant une pièce frittée selon l'invention.

Pour ces articles en particulier, une rugosité Ra de surface inférieure à 0,05 $\mu$m, de préférence inférieure à 0,02 $\mu$m, de préférence encore inférieure à 0,01 $\mu$m, est considérée comme particulièrement avantageuse.

L'invention concerne encore un article comportant une pièce frittée selon l'invention, ladite pièce frittée étant apparente, sauf à démonter, au moins partiellement, ledit article.

Dans un mode de réalisation, la pièce frittée ne participe pas substantiellement à la fonction principale de l'article, c'est-à-dire que ladite pièce frittée exerce principalement une fonction décorative, voire purement décorative. Autrement dit, le choix de la pièce frittée résulte principalement d'un choix esthétique.

## **Définitions**

- On appelle « frittage » une consolidation par traitement thermique à plus de 1100°C d'un aggloméré granulaire, avec éventuellement une fusion, partiellement ou totale, de certains des constituants de cet aggloméré (mais pas de tous ces constituants).
- Une structure cristallographique pérovskite correspond à un agencement particulier d'éléments dans des sites classiquement appelés « sites A » et « sites B ». On appelle habituellement « éléments A » et « éléments B » les éléments disposés sur les sites A et B, respectivement.
  Parmi les composés présentant une structure cristallographique pérovskite, on distingue en particulier les « oxydes de structure pérovskite ». Ces oxydes comprennent notamment des composés de formule $ABO_3$. Tous les sites A et/ou B ne sont pas toujours occupés par des éléments A et/ou B, respectivement.
  Par exemple, un oxyde de lanthane- manganèse (LM) de structure pérovskite est un composé où A est du lanthane et B du manganèse. Sa structure est classiquement définie par une formule du type *LaMnO₃*. Un autre exemple peut être un oxyde de lanthane- cobalt- fer- manganèse de structure pérovskite où A est du lanthane et B un mélange de cobalt, de fer et de manganèse défini par une formule du type *La Co$_x$Fe$_y$Mn$_z$O$_3$*, avec x + y + z = 1, x, y et z étant les fractions molaires des éléments cobalt, fer et manganèse, respectivement.

- On définit le « taux de pérovskite » hors impuretés, en %, selon la formule (1) suivante :

$$T = 100^* (A_{PER})/ (A_{PER} + A_{Phase\ secondaire}) \qquad\qquad (1)$$

où

    o A$_{PER}$ est l'aire mesurée sur un diagramme de diffraction X obtenu à partir d'un appareil du type diffractomètre D5000 de la société BRUKER pourvu d'un tube DX en cuivre, sans traitement de déconvolution, du pic principal ou du multiplet principal de diffraction des oxydes de structure pérovskite obtenus ;

    o A$_{Phase\ secondaire}$ est l'aire mesurée sur le même diagramme, sans traitement de déconvolution, du pic principal ou multiplet principal de diffraction de la phase secondaire. La phase secondaire est la phase présentant le pic principal ou le multiplet d'aire la plus grande, sans considérer les oxydes de structure pérovskite. Entre autres, la phase Mn$_3$O$_4$ peut être la phase secondaire identifiée,sur le diagramme de diffraction X.

Un multiplet est la superposition partielle de plusieurs pics. Par exemple, un multiplet composé de deux pics est un doublet, un multiplet composé de trois pics est un triplet.

- Dans une composition chimique, les teneurs en oxydes se rapportent aux teneurs globales pour chacun des éléments chimiques correspondants, exprimées sous la forme de l'oxyde le plus stable, selon la convention habituelle de l'industrie ; sont donc inclus les sous-oxydes et éventuellement nitrures, oxynitrures, carbures, oxycarbures, carbonitrures, ou même les espèces métalliques des éléments susmentionnés.
- Par « impuretés », on entend les constituants inévitables, introduits nécessairement avec les matières premières ou résultant de réactions avec ces constituants. Les impuretés ne sont pas des constituants nécessaires, mais seulement tolérés. En particulier, les composés faisant partie du groupe des oxydes, nitrures, oxynitrures, carbures, oxycarbures, carbonitrures et espèces métalliques de sodium et autres alcalins sont des impuretés. A titre d'exemples, on peut citer Na$_2$O. En revanche, l'oxyde d'hafnium n'est pas considéré comme une impureté. On considère qu'une teneur totale en impuretés inférieure à 2% ne modifie pas substantiellement les résultats obtenus.
- Dans une source de particules de zircone, HfO$_2$ n'est pas chimiquement dissociable de ZrO$_2$. « ZrO$_2$ » désigne donc classiquement la teneur totale de ces deux oxydes. Selon la présente invention, HfO$_2$ n'est pas ajouté volontairement dans la charge de départ. HfO$_2$ ne désigne donc que les traces d'oxyde d'hafnium, cet oxyde étant toujours naturellement présent dans les sources de zircone à des teneurs généralement inférieures à 2%. Par souci de clarté, on peut donc désigner indifféremment la teneur en zircone et en traces d'oxyde d'hafnium par « ZrO$_2$+HfO$_2$ » ou par « ZrO$_2$ », on encore par « teneur en zircone ».
- On appelle « zircone stabilisée », une zircone stabilisée avec un stabilisant et constituée pour plus de 80%, voire plus de 90%, voire plus de 95%, voire sensiblement 100%, en volume, de phase quadratique et/ou cubique, le complément à 100% étant constitué de phase monoclinique. La quantité de zircone stabilisée est mesurée par diffraction X. Sur une pièce massive, la surface de mesure est polie, la dernière étape de polissage étant réalisée avec une préparation diamantée Mecaprex LD32-E 1 µm commercialisée par la société PRESI, après que la pièce a subi un traitement thermique à 1000°C pendant 1 heure et a été refroidie à température ambiante. Sur une poudre, la mesure est effectuée directement sur la poudre, sans broyage préalable.
- On appelle « précurseur » d'un produit un composé ou un ensemble de composés qui, lors d'un frittage, sous air, conduisent à la formation dudit produit. Dans le cas particulier d'un oxyde de structure pérovskite, un précurseur dudit oxyde de structure pérovskite est un composé constitué d'un mélange intime des oxydes et/ou des précurseurs des oxydes composant ledit oxyde de structure pérovskite. Un tel mélange intime peut par exemple être obtenu par coprécipitation ou atomisation. De préférence, le mélange intime est consolidé par un traitement thermique. Par exemple, si l'on considère un oxyde de lanthane- cobalt- fer- manganèse de structure pérovskite de formule *LaCo$_x$Fe$_y$Mn$_z$O$_3$*, avec x + y + z = 1, x, y et z étant les fractions molaires des éléments cobalt, fer et manganèse, respectivement, un précurseur de cet oxyde de structure pérovskite est un mélange intime d'oxyde de lanthane, d'oxyde de cobalt, d'oxyde de fer et d'oxyde de manganèse. Un autre précurseur possible est un mélange intime de précurseurs de ces oxydes, comme par exemple un mélange intime de nitrate de lanthane, de nitrate de cobalt, de nitrate de fer et de nitrate de manganèse.
- Une quantité d'un précurseur d'un produit est dite « équivalente » à une quantité dudit produit lorsque, lors du frittage, elle conduit à ladite quantité dudit produit.
- Par « temporaire », on entend « pouvant être éliminé de la préforme pendant le frittage ».

- On appelle « taille médiane » des grains d'une pièce frittée, la dimension mesurée selon la méthode de « Mean Linear Intercept » décrite dans la méthode ASTM E1382.
- On appelle « taille médiane » d'un ensemble de particules, généralement notée $D_{50}$, la taille divisant les particules de cet ensemble en première et deuxième populations égales en masse, ces première et deuxième populations ne comportant que des particules présentant une taille supérieure, ou inférieure respectivement, à la taille médiane.
- Les percentiles ou « centiles » 10 ($D_{10}$) et 90 ($D_{90}$) sont les tailles de particule correspondant aux pourcentages, en masse, de 10% et 50%, respectivement, sur la courbe de distribution granulométrique cumulée des tailles de particules de la poudre, les tailles de particules étant classées par ordre croissant. Par exemple, 10%, en masse, des particules de la poudre ont une taille inférieure à $D_{10}$ et 90% des particules en masse ont une taille supérieure à $D_{10}$. Les percentiles peuvent être déterminés à l'aide d'une distribution granulométrique réalisée à l'aide d'un granulomètre laser.
- L'aire spécifique est calculée par la méthode BET (Brunauer Emmet Teller) telle que décrite dans Journal of American Chemical Society 60 (1938), pages 309 à 316.

Sauf mention contraire, tous les pourcentages sont des pourcentages massiques sur la base des oxydes.

Dans les groupes $G_A$ (1) à (3), $G_B$ (1) à (3), $G_A$' (1) à (3), $G_B$' (1) à (3), Ga" et $G_B$" (1) à (3), $G_A$''' et $G_B$''' (1) à (3), $G_A^{4'}$ (1) à (3), $G_B^{4'}$ (1) à (2), $G_A^{5'}$ et $G_B^{5'}$ (1) à (3), $G_A^{6'}$, (1) à (3), $G_B^{6'}$, (1) à (2), $G_A^{7'}$, (1) à (3), $G_B^{7'}$ (1) à (2), $G_A^{8'}$ (1) à (3), les indices x, y, z, et t sont des fractions molaires.

## Description détaillée

Un mélange particulaire selon l'invention est de préférence constitué pour plus de 95%, plus de 98%, voire sensiblement 100% d'oxydes.

De préférence, le mélange particulaire présente une aire spécifique, calculée par la méthode BET, supérieure à 3 m²/g, de préférence supérieure à 5 m²/g et/ou inférieure à 30 m²/g, de préférence inférieure à 25 m²/g, de préférence inférieure à 20 m²/g.

De préférence encore, il présente une taille médiane ($D_{50}$) inférieure à 10 $\mu$m, voire inférieure à 5 $\mu$m, voire inférieure à 3 $\mu$m, voire inférieure à 1 $\mu$m et/ou de préférence supérieure à 0,05 $\mu$m.

Le mélange particulaire peut se présenter sous une forme sèche, c'est-à-dire être obtenu directement par mélange des matières premières adéquates. Il peut aussi avoir subi une étape supplémentaire, par exemple une étape d'atomisation, notamment pour en améliorer l'homogénéité chimique.

Le constituant principal du mélange particulaire est la zircone.

La taille médiane de la zircone est inférieure à 10 $\mu$m, voire inférieure à 5 $\mu$m, voire inférieure à 3 $\mu$m, voire inférieure à 1 $\mu$m et/ou de préférence supérieure à 0,05 $\mu$m.

Dans la pièce frittée, la zircone doit être stabilisée. Dans le mélange particulaire, la zircone peut donc être, de préférence, stabilisée, avec ledit stabilisant, de préférence avec $Y_2O_3$.

Le stabilisant et/ou un précurseur d'un tel stabilisant peuvent aussi, partiellement ou totalement, être incorporés dans le mélange particulaire sous forme d'une poudre, c'est-à-dire sous une forme séparée de la zircone, de manière que, lors du frittage, au moins une partie de la zircone soit stabilisée.

De préférence, le mélange particulaire comporte un stabilisant de la zircone choisi dans le groupe formé par $Y_2O_3$, $CeO_2$ et leurs mélanges. De préférence, la quantité de $Y_2O_3$, $CeO_2$ respecte la relation 10% $\leq$ 3.$Y_2O_3$ + $CeO_2$ $\leq$ 20%.

De préférence, ledit stabilisant est $Y_2O_3$. La teneur en $Y_2O_3$ peut notamment être supérieure à 3%, de préférence supérieure à 4% et/ou inférieure à 8%, de préférence inférieure à 6,5%.

La taille médiane de la poudre de stabilisant et/ou d'un précurseur d'un tel stabilisant de la zircone est inférieure à 1 $\mu$m, de préférence inférieure à 0,5 $\mu$m, de préférence encore inférieure à 0,1 $\mu$m. L'efficacité du stabilisant de la zircone en est avantageusement améliorée lors du frittage.

Selon l'invention, le mélange particulaire comporte encore un ou plusieurs oxyde(s) de structure pérovskite et/ou précurseur(s) de tels oxydes.

Les particules d'oxydes de structure pérovskite d'un mélange particulaire selon l'invention peuvent être obtenues par différents procédés, comme la fusion, la synthèse en phase solide, la pyrolyse de sels, la précipitation d'hydroxydes et leur calcination, ou la synthèse par voie sol-gel.

Les inventeurs ont découvert que si le mélange particulaire comporte plus de 10,0% en masse d'oxyde(s) de structure pérovskite et/ou de précurseur(s) de tels oxydes, les propriétés mécaniques, notamment de ténacité, des pièces frittées sont dégradées. Cette dégradation est rédhibitoire en particulier lorsque les pièces frittées sont destinées à la fabrication d'articles décoratifs tels que des montres, des bracelets, des broches, des épingles de cravate, des colliers, des téléphones, du mobilier ou des ustensiles ménagers comme des couteaux ou des ciseaux. Il est donc important que la teneur totale en oxyde(s) de structure pérovskite et/ou précurseur(s) de tels oxydes ne dépasse pas 10,0%.

Une teneur minimale de 0,5% d'oxyde(s) de structure pérovskite et/ou de précurseur(s) de tels oxydes dans le mélange particulaire est considérée comme indispensable à l'obtention d'une pièce frittée présentant une bonne résistance aux rayures et aux chocs, ainsi qu'un bel aspect avec des couleurs bien développées et homogènes.

La poudre constituée des particules d'oxyde(s) de structure pérovskite et/ou de précurseur(s) de tels oxydes présente de préférence une taille médiane inférieure à 5 $\mu$m, de préférence inférieure à 1 $\mu$m, de préférence inférieure à 0,5 $\mu$m. Avantageusement, l'efficacité du ou des oxyde(s) de structure pérovskite dans la pièce frittée en est améliorée.

Dans un mode de réalisation, le mélange particulaire ne contient pas d'additif de frittage, ni de précurseur d'un tel additif. De préférence cependant, le mélange particulaire contient un additif de frittage et/ou un précurseur d'un tel additif. Avantageusement, la présence d'un additif de frittage permet de réduire la température de frittage.

La teneur totale en additif de frittage et en précurseur d'un tel additif peut être supérieure à 0,1%, supérieure à 0,2%, et/ou inférieure à 1,5%, de préférence inférieure à 1,0%, de préférence inférieure à 0,5%.

L'additif de frittage est de préférence choisi dans le groupe formé par $Al_2O_3$, $TiO_2$ et leurs mélanges, de préférence l'additif de frittage est $Al_2O_3$.

Les « autres oxydes » représentent de préférence moins de 1,5%, de préférence moins de 1%, de préférence encore moins de 0,5%, de préférence moins de 0,2%, de préférence moins de 0,1%, de préférence moins de 0,05%, de préférence moins de 0,01%.

Les « autres oxydes » ne sont de préférence que des impuretés.

Un mélange particulaire selon l'invention peut également comporter un ou plusieurs défloculant(s) et/ou liant (s) et/ou lubrifiants, de préférence temporaires, utilisés classiquement dans les procédés de mise en forme pour la fabrication de préformes à fritter, par exemple une résine acrylique, du polyéthylène glycol (PEG), ou de l'alcool polyvinylique (APV).

Une pièce frittée selon l'invention peut être fabriquée à partir d'un mélange particulaire selon l'invention selon un procédé comportant classiquement les étapes a) à c). Optionnellement, ce procédé comporte, préalablement à l'étape a), une étape de broyage permettant d'atteindre les caractéristiques granulométriques nécessaires à la bonne densification ultérieure du matériau. En particulier, un broyage peut être mis en oeuvre pour que chacune des poudres utilisées à l'étape a) ou pour que le mélange particulaire de l'ensemble de ces poudres présente une taille médiane ($D_{50}$) inférieure à 1 $\mu$m.

A l'étape a), un mélange particulaire selon l'invention "prêt-à-l'emploi" peut être mis en oeuvre. En variante, toutes les matières premières peuvent être dosées au moment de la préparation de la charge de départ.

La charge de départ peut encore comporter un ou plusieurs défloculant(s) et/ou liant(s) et/ou lubrifiants, de préférence temporaires, utilisés classiquement dans les procédés de mise en forme pour la fabrication de préformes à fritter, par exemple une résine acrylique, du polyéthylène glycol (PEG) ou de l'alcool polyvinylique (APV).

Le mélange des matières premières peut éventuellement être atomisé avant de passer à l'étape b). Avantageusement, l'atomisation permet d'améliorer l'homogénéité chimique dudit mélange.

A l'étape b), le mélange est ensuite mis en forme, par exemple par pressage isostatique à froid, afin de former des blocs de taille désirée.

D'autres techniques telles que le coulage en barbotine, le pressage uniaxial, le coulage d'un gel, le vibro-coulage, le moulage par injection ou une combinaison de ces techniques pourraient être utilisées.

A l'étape c), la préforme est frittée, de préférence sous air, à pression atmosphérique ou sous pression (pressage à chaud (« Hot Pressing » en anglais) ou pressage isostatique à chaud (« Hot Isostatic Pressing » en anglais, ou HIP)) et à une température comprise entre 1200°C et 1500°C, de préférence entre 1300°C et 1450°C. Avantageusement, un frittage dans ce domaine de température favorise un bon développement de la couleur. Le temps de maintien à cette température est de préférence compris entre 2 et 8 heures. La vitesse de montée est classiquement comprise entre 10 et 100°C/h. La vitesse de descente peut être libre. Si des défloculant(s) et/ou liant(s) et/ou lubrifiants sont utilisés, le cycle de frittage comprend de préférence un palier de 1 à 4 heures à une température comprise entre 400°C et 800°C afin de favoriser l'élimination desdits produits.

Les paramètres du procédé de fabrication, en particulier la granulométrie des particules de la charge de départ, l'additif de frittage, la compression pour fabriquer la préforme et la température de frittage peuvent être adaptés, de manière connue, pour adapter la densité de la pièce frittée à l'application visée.

La pièce frittée obtenue en fin de l'étape c) peut être usinée et/ou subir un traitement de surface, comme par exemple un polissage ou un sablage, selon toute technique connue de l'homme du métier.

### Exemples

Les exemples suivants sont fournis à des fins illustratives et non limitatives

Les analyses chimiques ont été réalisées par fluorescence X en ce qui concerne les constituants dont la teneur est supérieure à 0,5%. La teneur des constituants présents en une quantité inférieure à 0,5% a été déterminée par AES-ICP (« Atomic Emission Spectoscopy-Inductively Coupled Plasma » en anglais).

L'aire spécifique a été mesurée par adsorption d'azote à 77 K et calculée par la méthode BET à 1 point. Les échantillons sont pré-traités à 300°C sous flux d'azote pendant 2 heures avant analyse.

Les phases cristallines dans les poudres et dans les pièces frittées ont été déterminées par diffraction X sur un appareil Brucker D5000 (avec un réglage pour $2\theta$ de 5° à 80°, avec un pas de 0,02° et 1 seconde par pas).

Préalablement à la mesure, les pièces frittées de zircone ont été polies, la dernière étape de polissage ayant été réalisée avec une préparation diamantée Mecaprex LD32-E 1$\mu$m commercialisée par la société PRESI, puis traitées thermiquement à 1000°C pendant 1 heure et refroidies à température ambiante.

Les distributions granulométriques ont été déterminées par sédigraphie, au moyen d'un sédigraphe Sedigraph 5100 de la société Micromeritics®, après avoir dispersé sous ultra-sons une suspension des poudres à caractériser en présence de métaphosphate de sodium.

Une analyse EDS (« Energy Dispersive Spectroscopy » en anglais) peut également être réalisée pour identifier la nature des oxydes de structure pérovskite présents dans un mélange particulier, ainsi que dans la pièce frittée.

La taille médiane des grains d'une pièce frittée a été mesurée par une méthode de « Mean Linear Intercept », selon la norme ASTM E1382. Suivant cette norme, on trace des lignes d'analyse sur des images de ladite pièce frittée, puis, le long de chaque ligne d'analyse, on mesure les longueurs, dites « intercepts », entre deux joints de grains consécutifs coupant ladite ligne d'analyse. On détermine ensuite la longueur moyenne « l' » des intercepts « l ». Pour les tests ci-dessous, les intercepts ont été mesurés sur des images, obtenues par microscopie électronique à balayage, de sections de la pièce frittée, lesdites sections ayant préalablement été polies jusqu'à obtention d'une qualité miroir puis attaquées thermiquement à une température inférieure de 100°C à la température de frittage, pour révéler les joints de grains. Le grossissement utilisé pour la prise des images a été choisi de façon à visualiser environ 500 grains sur une image. 5 images par pièce frittée ont été réalisées.

La taille moyenne « d » des grains de la pièce frittée est donnée par la relation : d =1,56.l'. Cette formule est issue de « Average Grain Size in Polycrystalline Ceramics » M. I. Mendelson, J. Am. Cerm. Soc. Vol. 52, No.8, pp443-446.

Les mesures de couleur ont été réalisées selon la norme NF ISO 7724 sur des pièces polies dont la dernière étape de polissage a été réalisée avec une préparation diamantée Mecaprex LD32-E 1$\mu$m commercialisée par la société PRESI, à l'aide d'un appareil CM-2500d, fabriqué par la société Konica Minolta, avec illuminant D65 (lumière naturelle), observateur à 10°, et réflexion spéculaire exclue.

La dureté et la ténacité des pièces frittées testées ont été mesurées par indentation Vickers sur des pièces frittées polies, la dernière étape de polissage ayant été réalisée avec une pâte diamantée de 1 $\mu$m.

La résistance en flexion a été mesurée à température ambiante par flexion 3 points sur des barrettes usinées de dimensions 45 mm x 4 mm x 3 mm.

Les exemples non limitatifs suivants sont donnés dans le but d'illustrer l'invention.

Les poudres des différents oxydes de structure pérovskite utilisés dans les exemples sont préparées par réaction en phase solide des différents sels, nitrates ou chlorures co- précipités en milieu basique par de l'ammoniaque. Les sels employés, fournis par Sigma Aldrich, sont du nitrate de lanthane hydraté La $(NO_3)_3$, $xH_2O$, du chlorure de strontium hexahydraté $SrCl_2$, $6H_2O$, nitrate de manganèse hydraté Mn $(NO_3)_2$, $xH_2O$, du nitrate de cobalt hexahydraté, Co $(NO_3)_2$, $6H_2O$, du nitrate de fer nonahydraté Fe $(NO_3)_3$, $9H_2O$, du chlorure de chrome hexahydraté $CrCl_3$, $6H_2O$, du nitrate de praséodyme hexahydraté Pr $(NO_3)_3$, $6H_2O$, et du chlorure de titane $TiCl_4$. Les sels sont mis en solution dans de l'eau distillée à concentration totale de 1 mol/l. Les masses des différents sels introduits figurent dans le tableau 1 suivant :

| | $(La_{0,8}Sr_{0,2})MnO_3$ | $La(Co_{0,5}Fe_{0,5})O_3$ | $La(Co_{0,1}Fe_{0,1}Mn_{0,8})O_3$ | $La(Co_{0,2}Fe_{0,2}Mn_{0,6})O_3$ |
|---|---|---|---|---|
| Eau distillée | Complément à 500 ml | Complément à 500 ml | Complément à 500 ml | Complément à 500 ml |
| $La(NO_3)_3, xH_2O$ | 65 g | 80 g | 80 g | 80 g |
| $Mn(NO_3)_2, xH_2O$ | 62 g | - | 50 g | 50 g |
| $SrCl_2, 6H_2O$ | 13 g | - | - | - |
| $Co(NO_3)_2, 6H_2O$ | - | 35 g | 6 g | 14,5 g |
| $Fe(NO_3)_3, 9H_2O$ | - | 48,5 g | 8 g | 20 g |

| | $La(Co_{0,9}Cr_{0,1})O_3$ | $La\ Co\ O_3$ | $La(Co_{0,95}Co_{0,05})O_3$ | $La(Cr_{0,9}Co_{0,1})O_3$ |
|---|---|---|---|---|
| Eau distillée | Complément à 500 ml | Complément à 500 ml | Complément à 500 ml | Complément à 500 ml |
| $La(NO_3)_3, xH_2O$ | 80 g | 80 g | 80 g | 80 g |
| $Co(NO_3)_2, 6H_2O$ | 63 g | 70 g | 67 g | 7 g |
| $CrCl_3, 6H_2O$ | 6,4 g | - | 3,2 g | 58 g |

| | $La(Co_{0,6}Cr_{0,4})O_3$ | $Pr(Ti_{0,8}Fe_{0,2})O_3$ | $La\ Fe\ O_3$ | $La(Fe_{0,7}Cr_{0,3})O_3$ |
|---|---|---|---|---|
| Eau distillée | Complément à 500 ml | Complément à 500 ml | Complément à 500 ml | Complément à 500 ml |
| $La(NO_3)_3, xH_2O$ | 80 g | - | 80 g | 80 g |
| $Co(NO_3)_2, 6H_2O$ | 42 g | - | - | - |
| $CrCl_3, 6H_2O$ | 25,5 g | - | - | 19,2 g |
| $Fe(NO_3)_3, 9H_2O$ | - | 15 g | 97 g | 68 g |
| $Pr(NO_3)_3, 6H_2O$ | - | 80 g | - | - |
| $TiCl_4$ | - | 28 g | - | - |

| | $La(Fe_{0,9}Co_{0,1})O_3$ |
|---|---|
| Eau distillée | Complément à 500 ml |
| $La(NO_3)_3, xH_2O$ | 80 g |
| $Co(NO_3)_2, 6H_2O$ | 7 g |
| $Fe(NO_3)_3, 9H_2O$ | 87 g |

Tableau 1

L'ammoniaque est ajoutée progressivement sous agitation jusqu'à un pH de 9. Le précipité obtenu est ensuite filtré sur Buchner. Les précipités sont ensuite séchés pendant au moins 12 h à l'étuve à 110°C. Les poudres ainsi obtenues sont traitées thermiquement sous air à une température permettant la formation de la phase pérovskite, en général comprise entre 1000°C et 1400°C. (Une température inférieure aurait été possible, mais aurait conduit à un précurseur de pérovskite). Dans le cas présent, la température était de 1300°C. Après traitement thermique, le taux de pérovskite mesuré par diffraction X sur chacune des poudres était supérieur à 97,5%.

La détermination de la teneur en phase de structure pérovskite a été déterminée par la méthode décrite auparavant dans la présente description. A titre d'exemple, la détermination du taux de pérovskite d'oxyde de lanthane-strontium- manganèse $(La_{0,8}Sr_{0,2})\ MnO_3$ a été effectuée à partir des diagrammes de diffraction X, acquis avec un diffractomètre D5000 de la société BRUKER pourvu d'un tube DX en cuivre. Après synthèse, les produits obtenus peuvent comporter la phase pérovskite ainsi que d'autres phases, en quantités moins importantes, comme $Mn_3O_4$.

Les phases pérovskites des oxydes de lanthane- strontium- manganèse sont identifiées, suivant le protocole classique, par diffraction X, au moyen de fiches ICDD (« International Center for Diffraction Data ») . Par exemple, la fiche ICDD 01- 040- 1100 est celle de la phase pérovskite de l'oxyde de lanthane- strontium- manganèse $La_{0,8}Sr_{0,2}MnO_3$.

Dans la pratique, les mesures du taux de pérovskite des oxydes de lanthane - strontium - manganèse sont effectuées lorsque le diagramme de diffraction X montre :

- une phase pérovskite d'oxyde de lanthane - strontium - manganèse majoritaire,

- une phase secondaire et éventuellement d'autres phases minoritaires.

Alors, à l'aide du logiciel EVA (commercialisé par la société BRUKER) et après avoir effectué une soustraction du fond continu (background 0, 8), il est possible de mesurer l'aire $A_{PER}$ (sans traitement de déconvolution) du pic principal ou multiplet principal de diffraction de la phase pérovskite de l'oxyde de lanthane- strontium- manganèse et l'aire $A_{phase\ secondaire}$ (sans traitement de déconvolution) du pic principal ou multiplet principal de diffraction de la phase secondaire ($Mn_3O_4$ dans le cas présent) . Le taux de pérovskite d'oxyde de lanthane- strontium- manganèse est alors calculé suivant la formule (1) .

Ainsi, si la phase de pérovskite de l'oxyde de lanthane- strontium- manganèse (LSM) est la seule phase en présence dans le diagramme de diffraction X, le taux de pérovskite est égal à 100 %. Dans le cas présent, la taux de pérovskite $La_{0,8}Sr_{0,2}MnO_3$ calculé suivant la formule (1) est de 97, 9%.

Pour chacun des exemples réalisés, la poudre d'oxyde de structure pérovskite est mélangée à une poudre de zircone dont les principales caractéristiques figurent dans le tableau 2, par microbroyage de la poudre de zircone avec la poudre d'oxyde de structure pérovskite. L'alumine de cette poudre de zircone sert avantageusement d'additif de frittage.

<div align="center">Tableau 2</div>

|  | Poudre de zircone yttriée |
| --- | --- |
| $ZrO_2$ (% massique) | Complément à 100% |
| $Y_2O_3$ (% massique) | 5,38 |
| $Al_2O_3$ (ppm) | 2500 |
| $SiO_2$ (ppm) | 100 |
| $Na_2O$ (ppm) | 140 |
| CaO (ppm) | 70 |
| $Fe_2O_3$ (ppm) | 80 |
| MgO (ppm) | <20 |
| $TiO_2$ (ppm) | <20 |
| Aire spécifique ($m^2$/g) | 13 |
| $d_{10}$ ($\mu$m) | 0,2 |
| $d_{50}$ ($\mu$m) | 0,6 |
| $d_{90}$ ($\mu$m) | 1,5 |

Ce microbroyage est effectué dans un broyeur humide à billes (billes de zircone à 3 mol% d'$Y_2O_3$, de diamètre 0,8 mm) ou "attriteur". Les conditions de broyage employées pour chaque mélange sont les suivantes :

- Volume du broyeur : 800 ml ;
- Masse de billes : 2,2 kg ;
- Volume d'eau déminéralisée : 200 ml ;
- Masse de poudre à microbroyer : 50 g.

Après microbroyage, les poudres présentent une taille médiane, mesurée par sédigraphie de 0,25 $\mu$m.

Les différentes suspensions sont ensuite séchées par atomisation, avec une température en entrée de l'atomiseur de 300°C et une température en sortie de l'atomiseur de 110°C, le débit de la suspension étant de 6 l/h. Les poudres ainsi obtenues sont ensuite tamisées au tamis de 250 $\mu$m.

Les différents mélanges particulaires réalisés figurent dans le tableau 3 suivant :

Tableau 3

| | Poudre de zircone yttriée selon le tableau 2 (%) | Poudre d'oxyde de structure pérovskite (%) | Nature de l'oxyde de structure pérovskite |
|---|---|---|---|
| Exemple 1 | 96 | 4 | $(La_{0,8}Sr_{0,2}) MnO_3$ |
| Exemple 2 | 94 | 6 | $(La_{0,8}Sr_{0,2}) MnO_3$ |
| Exemple 3 | 90 | 10 | $(La_{0,8}Sr_{0,2}) MnO_3$ |
| Exemple 4 | 99 | 1 | $(La_{0,8}Sr_{0,2}) MnO_3$ |
| Exemple 5 | 96 | 4 | $La (Co_{0,5}Fe_{0,5})O_3$ |
| Exemple 6 | 96 | 4 | $La (Co_{0,1} Fe_{0,1} Mn_{0,8}) O_3$ |
| Exemple 7 | 96 | 4 | $La (Co_{0,2} Fe_{0,2} Mn_{0,6}) O_3$ |
| Exemple 8 | 96 | 4 | $La (Co_{0,8}Cr_{0,1}) O_3$ |
| Exemple 9 | 96 | 4 | $La Co O_3$ |
| Exemple10 | 99 | 1 | $La (Co_{0,95} Co_{0,05}) O_3$ |
| Exemple11 | 96 | 4 | $La (Cr_{0,9} Co_{0,1}) O_3$ |
| Exemple 12 | 98 | 2 | $La (Cr_{0,9} Co_{0,1}) O_3$ |
| Exemple 13 | 98 | 2 | $La (Co_{0,8} Cr_{0,4}) O_3$ |
| Exemple 14 | 96 | 4 | $Pr (Ti_{0,8} Fe_{0,2}) O_3$ |
| Exemple 15 | 99 | 1 | $La Fe O_3$ |
| Exemple 16 | 96 | 4 | $La (Fe_{0,7} Cr_{0,3}) O_3$ |
| Exemple 17 | 99 | 1 | $La (Fe_{0,7} Mn_{0,3}) O_3$ |
| Exemple 18 | 96 | 4 | $La Fe 0_3$ |
| Exemple 19 | 96 | 4 | $La (Fe_{0,9} Co_{0,1}) O_3$ |

Des préformes, sous la forme de pastilles de diamètre 32 mm et de masse 8 grammes, ont été réalisées par pressage uniaxial à une pression de 100 MPa des mélanges particulaires des exemples. Lesdites préformes ont ensuite été frittées suivant le cycle suivant :

- montée en température à 500°C à 100°C/h,

- maintien à 500°C pendant 2 heures,

- montée en température jusqu'à 1350°C, à 100°C/h,

- maintien à 1350°C pendant 2 heures,

- descente en température par refroidissement naturel.

Le tableau 4 suivant résume les propriétés des pièces frittées obtenues.

Tableau 4

| Mélange particulaire selon l'exemple | Densité (g/cm$^3$) | Ténacité (MPa·m$^{1/2}$) | Dureté (HV10) | L* | a* | b* | Couleur |
|---|---|---|---|---|---|---|---|
| 1 | 5,96 | 11 | 1340 | 0,3 | 0,2 | 0,1 | noir |
| 2 | 5,94 | 9 | 1320 | 0,3 | 0,1 | 0,1 | noir |

(suite)

| Mélange particulaire selon l'exemple | Densité (g/cm³) | Ténacité (MPa·m^1/2) | Dureté (HV10) | L* | a* | b* | Couleur |
|---|---|---|---|---|---|---|---|
| 3 | 5,90 | 7 | 1300 | 0,2 | 0,0 | 0,1 | noir |
| 4 | 6,00 | - | 1340 | 30 | 3 | 4 | gris |
| 5 | 5,96 | 10 | 1350 | 0,4 | 0,2 | -0,15 | noir |
| 6 | 5,96 | 12 | 1350 | 0,1 | 0,0 | 0,1 | noir |
| 7 | 5,97 | 11 | 1380 | 0,2 | 0,1 | 0,1 | noir |
| 8 | 5,98 | 12 | 1340 | 20 | -18 | -23 | bleu foncé |
| 9 | 5,97 | 11 | 1320 | 24 | -5 | -30 | bleu foncé |
| 10 | 6,0 | 13 | 1350 | 38 | -7 | -27 | bleu clair |
| 11 | 5,98 | - | - | 20 | -15 | 20 | vert foncé |
| 12 | 5,99 | - | - | 40 | -10 | 20 | vert clair |
| 13 | 6,0 | 13 | 1350 | 40 | -10 | -5 | gris |
| 14 | 5,96 | 7 | 1280 | 65 | -2 | 20 | jaune |
| 15 | 6,01 | 9 | 1300 | 65 | 15 | 30 | orange |
| 16 | 5,97 | 10 | 1320 | 19 | 12 | 32 | marron foncé |
| 17 | 6,0 | 9 | 1350 | 44 | 5 | 19 | orange |
| 18 | 5,98 | - | - | 45 | 13 | 1,3 | rouge |
| 19 | 5,98 | - | - | 20 | 10 | -5 | violet |

La zircone des pièces frittées obtenues à partir des mélanges particulaires 1 à 7 est constituée pour plus de 95%, en volume, de phase quadratique et/ou cubique, le complément à 100% étant constitué de phase monoclinique.

Le tableau 4 montre que les pièces frittées selon l'invention testées présentent de bonnes propriétés mécaniques et sont denses.

Une comparaison des exemples 1 à 3 montre une diminution des propriétés mécaniques, notamment de la ténacité, lorsque la teneur en pérovskite $(La_{0,8} Sr_{0,2}) MnO_3$ augmente. Lorsque la teneur en oxyde de structure pérovskite est supérieure à 10,0%, on considère que les propriétés mécaniques sont insuffisantes pour les applications visées.

Les pièces frittées selon l'invention sont particulièrement bien adaptées à une utilisation comme parure décorative dans des articles tels que des montres, des bracelets, des broches, des épingles de cravate, des colliers, des téléphones, du mobilier ou des ustensiles ménagers comme des couteaux ou des ciseaux.

Bien entendu, la présente invention n'est pas limitée aux modes de réalisation décrits et fournis à titre d'exemples.

**Revendications**

1. Article décoratif choisi dans le groupe formé par un bijou, une montre, un bracelet, un collier, une bague, une broche, une épingle de cravate, un sac à main, un téléphone, un meuble et un ustensile ménager, une poignée, un bouton, un placage, une partie visible d'un équipement de bien de consommation, une partie de monture de lunettes, un article de vaisselle, un cadre, ledit article comportant une pièce frittée obtenue à partir d'un mélange particulaire présentant la composition chimique suivante, en pourcentages massiques sur la base des oxydes :

   - zircone $ZrO_2$ : complément à 100% ;
   - 0,5 à 10,0% d'oxyde(s) de structure pérovskite ;
   - 2,0 à 20,0% d'un stabilisant de la zircone choisi dans le groupe formé par $Y_2O_3$, $Sc_2O_3$, MgO, CaO, $CeO_2$ et leurs mélanges, la teneur MgO + CaO étant inférieure à 5,0% ;

- moins de 2,0% d'un additif de frittage choisi dans le groupe formé par Al$_2$O$_3$, ZnO, TiO$_2$ et leurs mélanges ;
- moins de 2,0% d'autres oxydes,

le ou les oxyde(s) de structure pérovskite et/ou ledit stabilisant et/ou ledit additif de frittage pouvant être remplacés, totalement ou en partie, par une quantité équivalente de précurseur(s) de ces oxydes.

2. Article selon la revendication 1, présentant une surface dont la rugosité Ra est inférieure à 0,05 µm, ou est comprise entre 0,1 et 0,5 µm.

3. Article selon l'une quelconque des revendications précédentes, ledit mélange comportant 0,5 à 10,0%, en pourcentage massique sur la base des oxydes, d'un oxyde de structure pérovskite et/ou d'un précurseur d'un tel oxyde

- dans lequel l'élément A au site A de la structure pérovskite dudit oxyde est sélectionné dans le groupe G$_A$(1) formé par le calcium, le strontium, le baryum, le lanthane, le praséodyme, le néodyme, le bismuth, le cérium, et leurs mélanges ; et
- l'élément B au site B de la structure pérovskite dudit oxyde est sélectionné dans le groupe G$_B$(1) formé par un mélange de cobalt et de fer, un mélange de cobalt et de manganèse, un mélange de cobalt et de chrome, un mélange de cobalt et de nickel, un mélange de chrome et de manganèse, un mélange de chrome et de nickel, un mélange de chrome et de fer, un mélange de manganèse et de fer, un mélange de manganèse et de nickel, un mélange de nickel et de fer, le manganèse, un mélange de cobalt et de titane, un mélange de cobalt et de cuivre, le cobalt, un mélange de chrome et de titane, un mélange de chrome et de cuivre, un mélange de nickel et de titane, le chrome, le nickel, le cuivre, un mélange de magnésium et de fer, un mélange de titane et de fer, le vanadium, le tungstène, le molybdène, un mélange de niobium et de fer, le fer, et leurs mélanges.

4. Article selon la revendication 3, dans lequel

- l'élément A au site A de la structure pérovskite est sélectionné dans le groupe G$_A$'(1) formé par le calcium, le strontium, le baryum, le lanthane, le praséodyme, le néodyme, le bismuth, le cérium, et leurs mélanges, et
- l'élément B au site B de la structure pérovskite est sélectionné dans le groupe G$_B$'(1) formé par un mélange de cobalt et de fer Co$_x$Fe$_{1-x}$, avec x compris entre 0,2 et 0,8, un mélange de cobalt et de manganèse Co$_x$Mn$_{1-x}$, avec x compris entre 0,2 et 0,8, un mélange de cobalt et de chrome Co$_x$Cr$_{1-x}$, avec x compris entre 0,2 et 0,8, un mélange de cobalt et de nickel Co$_x$Ni$_{1-x}$, avec x compris entre 0,3 et 0,8, un mélange de chrome et de manganèse Cr$_x$Mn$_{1-x}$, avec x compris entre 0,2 et 0,7, un mélange de chrome et de nickel Cr$_x$Ni$_{1-x}$, avec x compris entre 0,3 et 0,7, un mélange de chrome et de fer Cr$_x$Fe$_{1-x}$, avec x compris entre 0,3 et 0,7, un mélange de manganèse et de fer Mn$_x$Fe$_{1-x}$, avec x compris entre 0,3 et 0,8, un mélange de manganèse et de nickel Mn$_x$Ni$_{1-x}$, avec x compris entre 0,3 et 0,8, un mélange de nickel et de fer Ni$_x$Fe$_{1-x}$, avec x compris entre 0,3 et 0,7, le manganèse, et leurs mélanges,

ou dans lequel

- l'élément A au site A de la structure pérovskite est sélectionné dans le groupe G$_A$"(1) formé par le calcium (Ca), le strontium (Sr), le baryum (Ba), le lanthane (La), le praséodyme (Pr), le néodyme (Nd), le bismuth (Bi), le cérium (Ce), et leurs mélanges ; et
- l'élément B au site B de la structure pérovskite est sélectionné dans le groupe G$_B$"(1) formé par un mélange de cobalt et de fer Co$_x$Fe$_{1-x}$, avec 0,6 ≤ x < 1, un mélange de cobalt et de manganèse Co$_x$Mn$_{1-x}$, avec 0,6 ≤ x < 1, un mélange de cobalt et de chrome Co$_x$Cr$_{1-x}$, avec 0,6 ≤ x < 1, un mélange de cobalt et de nickel Co$_x$Ni$_{1-x}$, avec 0,6 ≤ x < 1, un mélange de cobalt et de titane Co$_x$Ti$_{1-x}$, avec 0,5 ≤ x < 1, un mélange de cobalt et de cuivre Co$_x$Cu$_{1-x}$, avec 0,5 ≤ x < 1, le cobalt, et leurs mélanges,

ou dans lequel

- l'élément A au site A de la structure pérovskite est sélectionné dans le groupe G$_A$'''(1) formé par le calcium (Ca), le strontium (Sr), le baryum (Ba), le lanthane (La), le praséodyme (Pr), le néodyme (Nd), le bismuth (Bi), le cérium (Ce), et leurs mélanges ; et
- l'élément B au site B de la structure pérovskite est sélectionné dans le groupe G$_B$'''(1) formé par un mélange de chrome et de fer Cr$_x$Fe$_{1-x}$, avec 0,6 ≤ x < 1, un mélange de chrome et de manganèse Cr$_x$Mn$_{1-x}$, avec 0,6 ≤ x < 1, un mélange de chrome et de cobalt Cr$_x$Co$_{1-x}$, avec 0,6 ≤ x < 1, un mélange de chrome et de nickel Cr$_x$

$Ni_{1-x}$, avec $0,6 \leq x < 1$, un mélange de chrome et de titane $Cr_x Tri_{1-x}$, avec $0,5 \leq x < 1$, un mélange de chrome et de cuivre $Cr_x Cu_{1-x}$, avec $0,5 \leq x < 1$, un mélange de nickel et de fer $Ni_x Fe_{1-x}$, avec $0,6 \leq x < 1$, un mélange de nickel et de manganèse $Ni_x Mn_{1-x}$, avec $0,6 \leq x < 1$, un mélange de nickel et de cobalt $Ni_x Co_{1-x}$, avec $0,6 \leq x < 1$, un mélange de nickel et de titane $Ni_x Ti_{1-x}$, avec $0,5 \leq x < 1$, le chrome, le nickel, le cuivre et leurs mélanges,

ou dans lequel

- l'élément A au site A de la structure pérovskite est sélectionné dans le groupe $G_A^{4'}(1)$ formé par le calcium (Ca), le strontium (Sr), le baryum (Ba), le lanthane (La), le praséodyme (Pr), le néodyme (Nd), le bismuth (Bi), le cérium (Ce), et leurs mélanges ; et
- l'élément B au site B de la structure pérovskite est sélectionné dans le groupe $G_B^{4'}(1)$ formé par un mélange de magnésium et de fer $Mg_x Fe_{1-x}$, avec $0,8 \leq x < 1$ et seulement si A est choisi parmi le praséodyme (Pr), le bismuth (Bi), le cérium (Ce), et leurs mélanges, un mélange de titane et de fer $Ti_x Fe_{1-x}$, avec $0,8 \leq x < 1$ et seulement si A est choisi parmi le praséodyme (Pr), le bismuth (Bi), le cérium (Ce), et leurs mélanges, le tungstène, le vanadium et le molybdène, et leurs mélanges,

ou dans lequel

- l'élément A au site A de la structure pérovskite est sélectionné dans le groupe $G_A^{5'}(1)$ formé par le calcium (Ca), le strontium (Sr), le baryum (Ba), le lanthane (La), le praséodyme (Pr), le néodyme (Nd), le bismuth (Bi), le cérium (Ce), et leurs mélanges ; et
- l'élément B au site B de la structure pérovskite est sélectionné dans le groupe $G_B^{5'}(1)$ formé par un mélange de magnésium et de fer $Mg_x Fe_{1-x}$ avec $0 < x \leq 0,5$, un mélange de titane et de fer $Ti_x Fe_{1-x}$, avec $0 < x \leq 0,5$, un mélange de niobium et de fer $Nb_x Fe_{1-x}$, avec $0 < x \leq 0,5$, un mélange de chrome et de fer $Cr_x Fe_{1-x}$, avec $0 < x \leq 0,4$, un mélange de nickel et de fer $Ni_x Fe_{1-x}$, avec $0 < x \leq 0,4$, un mélange de manganèse et de fer $Mn_x Fe_{1-x}$, avec $0 < x \leq 0,4$, le fer et leurs mélanges,

ou dans lequel

- l'élément A au site A de la structure pérovskite est sélectionné dans le groupe $G_A^{6'}(1)$ formé par le calcium (Ca), le strontium (Sr), le baryum (Ba), le lanthane (La), le praséodyme (Pr), le néodyme (Nd), le bismuth (Bi), le cérium (Ce), et leurs mélanges et
- l'élément B au site B de la structure pérovskite est sélectionné dans le groupe $G_B^{6'}(1)$ formé par un mélange de chrome et de fer $Cr_x Fe_{1-x}$, avec $0 < x \leq 0,4$, un mélange de nickel et de fer $Ni_x Fe_{1-x}$, avec $0 < x \leq 0,4$, un mélange de manganèse et de fer $Mn_x Fe_{1-x}$, avec $0 < x \leq 0,4$, et leurs mélanges,

ou dans lequel

- l'élément A au site A de la structure pérovskite est sélectionné dans le groupe $G_A^{7'}(1)$ formé par le calcium (Ca), le strontium (Sr), le baryum (Ba), le lanthane (La), le praséodyme (Pr), le néodyme (Nd), le bismuth (Bi), le cérium (Ce), et leurs mélanges ; et
- l'élément B au site B de la structure pérovskite est sélectionné dans le groupe $G_B^{7'}(1)$ formé par un mélange de magnésium et de fer $Mg_x Fe_{1-x}$ avec $0 < x \leq 0,5$, un mélange de titane et de fer $Ti_x Fe_{1-x}$, avec $0 < x \leq 0,5$, un mélange de niobium et de fer $Nb_x Fe_{1-x}$, avec $0 < x \leq 0,5$, le fer et leurs mélanges,

ou dans lequel

- l'élément A au site A de la structure pérovskite est sélectionné dans le groupe $G_A^{8'}(1)$ formé par le calcium (Ca), le strontium (Sr), le baryum (Ba), le lanthane (La), le praséodyme (Pr), le néodyme (Nd), le bismuth (Bi), le cérium (Ce), et leurs mélanges ; et
- l'élément B au site B de la structure pérovskite est un mélange de cobalt et de fer $Co_x Fe_{1-x}$, avec $0 < x \leq 0,4$.

5. Article selon l'une quelconque des revendications précédentes, ledit mélange comportant une quantité de poudre d'oxyde(s) de structure pérovskite et/ou de précurseur(s) de tels oxydes supérieure à 3% et/ou inférieure à 6%, en pourcentages massiques sur la base des oxydes.

6. Article selon l'une quelconque des revendications précédentes, ledit mélange comportant une quantité de poudre d'oxyde(s) de structure pérovskite et/ou de précurseur(s) de tels oxydes inférieure à 3%, en pourcentage massique sur la base des oxydes.

7. Article selon l'une quelconque des revendications précédentes, dans lequel le taux de pérovskite dans les « 0,5 à 10% d'oxyde(s) de structure pérovskite et/ou de précurseur(s) de tels oxydes » est supérieur à 90%, le « taux de pérovskite » hors impuretés, en %, étant défini selon la formulé (1) suivante :

$$T = 100^* (A_{PER})/ (A_{PER} + A_{Phase\ secondaire}) \qquad (1)$$

où

- $A_{PER}$ est l'aire mesurée sur un diagramme de diffraction X obtenu à partir d'un appareil du type diffractomètre D5000 de la société BRUKER pourvu d'un tube DX en cuivre, sans traitement de déconvolution, du pic principal ou du multiplet principal de diffraction des oxydes de structure pérovskite obtenus ;
- $A_{Phase\ secondaire}$ est l'aire mesurée sur le même diagramme, sans traitement de déconvolution, du pic principal ou multiplet principal de diffraction de la phase secondaire.

8. Article selon l'une quelconque des revendications précédentes dans lequel le stabilisant de la zircone est choisi dans le groupe formé par $Y_2O_3$, $CeO_2$ et leurs mélanges.

9. Article selon l'une quelconque des revendications précédentes, ledit mélange présentant une taille médiane inférieure à 10 $\mu$m.

10. Article selon l'une quelconque des revendications précédentes, ladite pièce frittée présentant une densité supérieure à 98% de la densité théorique.

11. Article selon l'une quelconque des revendications précédentes, dans laquelle la zircone est constituée pour plus de 80% en volume, de phase quadratique et/ou cubique, le complément à 100% étant constitué de phase monoclinique.

12. Article selon l'une quelconque des revendications précédentes, dans lequel:

- le stabilisant de la zircone est choisi dans le groupe formé par $Y_2O_3$, $Sc_2O_3$ et leurs mélanges et la teneur dudit stabilisant de la zircone est inférieure à 8 %, ou
- le stabilisant de la zircone est choisi dans le groupe formé par MgO, CaO et leurs mélanges et la teneur dudit stabilisant de la zircone est inférieure à 4 %, ou
- le stabilisant de la zircone est $CeO_2$ et la teneur dudit stabilisant de la zircone est supérieure à 10 % et inférieure à 15 %,

en pourcentage massique sur la base des oxydes.

13. Article selon l'une quelconque des revendications précédentes, dans lequel le stabilisant de la zircone est choisi dans le groupe formé par $Y_2O_3$, $CeO_2$ et leurs mélanges, et respecte la relation 10 % $\leq$ 3.$Y_2O_3$ + $CeO_2$ $\leq$ 20 %, en pourcentage massique sur la base des oxydes.

14. Procédé pour fabriquer un article décoratif selon l'une quelconque des revendications précédentes, procédé comportant les étapes suivantes pour fabriquer ladite pièce frittée :

a') mélange de matières premières pour former une charge de départ,
b') mise en forme d'une préforme à partir de ladite charge de départ,
c') frittage de ladite préforme à une température comprise entre 1 200 et 1 500 °C de manière à obtenir ladite pièce frittée,

procédé selon lequel la charge de départ est déterminée de manière à obtenir, à l'issue de l'étape c'), une pièce frittée conforme à celle d'un article selon la revendication 4.

15. Procédé selon la revendication précédente, dans lequel, pour foncer la couleur de ladite pièce frittée,

- on augmente, dans la charge de départ destinée à la fabrication de ladite pièce frittée, la quantité d'oxyde(s) de structure pérovskite et/ou de précurseur(s) de tels oxydes, cette quantité étant supérieure à 3% et inférieure à 9%, et/ou

- on ajoute à la charge de départ destinée à la fabrication de ladite pièce frittée, une quantité d'oxyde(s) de structure pérovskite et/ou de précurseur(s) de tels oxydes, les éléments A et B dudit pérovskite étant choisis dans les groupes $G_A$' (1) à (3) et $G_B$'(1) à (3) définis dans les revendications 7 à 9, en une quantité comprise entre 0,2% et 1%,

en pourcentage massique sur la base des oxydes de la charge de départ.


**Patentansprüche**

1. Schmuckartikel ausgewählt aus der Gruppe, die gebildet ist aus einem Schmuckstück, einer Uhr, einem Armband, einem Collier, einem Ring, einer Brosche, einer Krawattennadel, einer Handtasche, einem Telefon, einem Möbel und einem Haushaltsgerät, einem Handgriff, einem Knopf, einer Verblendung, einem sichtbaren Teil eines Konsumgütergeräts, einem Teil eines Brillengestells, Geschirr, einem Bilderrahmen, wobei besagter Artikel aus einem gesintertem Teil besteht, welches ausgehend von einer Sondermischung erhalten wird, welche die folgende chemische Zusammensetzung in Massenprozenten auf der Basis von Oxyden aufweist:

   - Zirkonoxyd $ZrO_2$ : Ergänzung zu 100%;
   - 0,5 bis 10,0% eines Oxyds (von Oxyden) mit perovskitischer Struktur;
   - 2,0 bis 20,0% eines Zirkonoxyd-Stabilisators, welcher ausgewählt ist aus der Gruppe, die gebildet ist durch $Y_2O_3$, $Sc_2O_3$, MgO, CaO, $CeO_2$ und ihren Mischungen, wobei der Gehalt MgO + CaO kleiner als 5% ist;
   - weniger als 2,0% eines Sinteradditivs, welches ausgewählt ist aus der Gruppe, die gebildet ist durch $Al_2O_3$, ZnO, $TiO_2$ und ihren Mischungen;
   - weniger als 2,0% von anderen Oxyden,

   wobei das Oxyd bzw. die Oxyde mit perovskitischer Struktur und/oder besagter Stabilisator und/oder besagtes Sinteradditiv ersetzt werden können, vollständig oder teilweise, durch eine äquivalente Menge eines Vorläufers (von Vorläufern) dieser Oxyde.

2. Artikel nach Anspruch 1, der eine Oberfläche aufweist, deren Rauheit Ra kleiner als $0,05\mu$m ist oder zwischen o,1 und 0,5 $\mu$m liegt.

3. Artikel nach einem der vorhergehenden Ansprüche, wobei die besagte Mischung 0,5 bis 10,0% in Massenprozenten auf der Basis von Oxyden eines Oxyds mit perovskitischer Struktur und/oder eines Vorläufers eines solchen Oxydes beinhaltet

   - in welchem das Element A im A-Bereich der perovskitischen Struktur des Oxyds ausgewählt ist aus der Gruppe $G_A(1)$ welche gebildet ist aus Kalzium, Strontium, Barium, Lanthan, Praseodym, Neodym, Wismuth, Cer, und ihren Mischungen;
   und
   - das Element B im B-Bereich der perovskitischen Struktur besagten Oxydes ausgewählt ist aus der Gruppe $G_B(1)$, welche gebildet ist aus einer Mischung von Kobalt und Eisen, einer Mischung von Kobalt und Mangan, einer Mischung von Kobalt und Chrom, einer Mischung von Kobalt und Nickel, einer Mischung von Chrom und Mangan, einer Mischung von Chrom und Nickel, einer Mischung von Chrom und Eisen, einer Mischung von Mangan und Eisen, einer Mischung von Mangan und Nickel, einer Mischung von Nickel und Eisen, von Mangan, einer Mischung von Kobalt und Titan, einer Mischung von Kobalt und Kupfer, von Kobalt, einer Mischung von Chrom und Titan einer Mischung von Chrom und Kupfer, einer Mischung von Nickel und Titan, von Chrom, von Nickel, von Kupfer, einer Mischung von Magnesium und Eisen, einer Mischung von Titan und Eisen, von Vanadium, von Wolfram, von Molybden, einer Mischung von Niob und Eisen, von Eisen und ihren Mischungen.

4. Artikel nach Anspruch 3, in welchem

   - das Element A des A-Bereiches der perovskitischen Struktur ausgewählt ist aus der Gruppe $G_A$'(1), welche gebildet ist aus Kalzium, Strontium, Barium, Lanthan, Praseodym, Neodym, Wismuth, Cer und ihren Mischungen
   und

- das Element B des B-Bereichs der perovskitischen Struktur ausgewählt ist aus der Gruppe $G_B'(1)$, welche gebildet ist aus einer Mischung von Kobalt und Eisen $Co_x Fe_{1-x}$, mit x zwischen 0,2 und 0,8, einer Mischung von Kobalt und Mangan $Co_x Mn_{1-x}$, mit x zwischen 0,2 und 0,8, einer Mischung von Kobalt und Chrom $Co_x Cr_{1-x}$ mit x zwischen 0,2 und 0,8, einer Mischung von Kobalt und Nickel $Co_x Ni_{1-x}$, mit x zwischen 0,3 und 0,8, einer Mischung von Chrom und Mangan $Cr_x Mn_{1-x}$, mit x zwischen 0,2 und 0,7, einer Mischung von Chrom und Nickel $Cr_x Ni_{1-x}$, mit x zwischen 0,3 und 0,7, einer Mischung von Chrom und Eisen $Cr_x Fe_{1-x}$, mit x zwischen 0,3 und 0,7, einer Mischung von Mangan und Eisen $Mn_x Fe_{1-x}$, mit x zwischen 0,3 und 0,8, einer Mischung von Mangan und Nickel $Mn_x Ni_{1-x}$, mit x zwischen 0,3 und 0,8, einer Mischung von Nickel und Eisen $Ni_x Fe_{1-x}$, mit x zwischen 0,3 und 0,7, dem Mangan und deren Mischungen,

oder in welchem

- das Element A aus dem A-Bereich der perovskitischen Struktur ausgewählt ist aus der Gruppe $G_A''(1)$, welche gebildet ist durch Kalzium (Ca), Strontium (Sr), Barium (Ba), Lanthan (La), Praseodym (Pr), Neodym (Nd), Wismuth (Bi), Cer (Ce) und ihren Mischungen; und

- das Element B aus dem B-Bereich der perovskitischen Struktur ausgewählt ist aus der Gruppe $G_B''(1)$, welche gebildet ist aus einer Mischung von Kobalt und Eisen $Co_x Fe_{1-x}$, mit $0,6 \leq x < 1$, einer Mischung von Kobalt und Mangan $Co_x Mn_{1-x}$, mit $0,6 \leq x < 1$, einer Mischung von Kobalt und Chrom $Co_x Cr_{1-x}$, mit $0,6 \leq x < 1$, einer Mischung von Kobalt und Nickel $Co_x Ni_{1-x}$, mit $0,6 \leq x < 1$, einer Mischung von Kobalt und Titan $Co_x Ti_{1-x}$, mit $0,5 \leq x < 1$, einer Mischung von Kobalt und Kupfer $Co_x Cu_{1-x}$, mit $0,5 \leq x < 1$, mit Kobalt und ihren Mischungen, oder in welchem

- das Element A aus dem A-Bereich der perovskitischen Struktur ausgewählt ist aus der Gruppe $G_A'''(1)$, welche gebildet ist durch Kalzium (Ca), Strontium (Sr), Barium (Ba), Lanthan (La), Praseodym (Pr), Neodym (Nd), Wismuth (Bi), Cer (Ce) und ihren Mischungen; und

das Element B aus dem B-Bereich der perovskitischen Struktur ausgewählt ist aus der Gruppe $G_B'''(1)$, welche gebildet ist durch eine Mischung von Chrom und Eisen $Cr_x Fe_{1-x}$, mit $0,6 \leq x < 1$, einer Mischung von Chrom und Mangan $Cr_x Mn_{1-x}$, mit $0,6 \leq x < 1$, einer Mischung von Chrom und Kobalt $Cr_x Co_{1-x}$, mit $0,6 \leq x < 1$, einer Mischung von Chrom und Nickel $Cr_x Ni_{1-x}$, mit $0,6 \leq x < 1$, einer Mischung von Chrom und Titan $Cr_x Ti_{1-x}$, mit $0,5 \leq x < 1$, einer Mischung von Chrom und Kupfer $Cr_x Cu_{1-x}$, mit $0,5 \leq x < 1$, einer Mischung von Nickel und Eisen $Ni_x Fe_{1-x}$, mit $0,6 \leq x < 1$, einer Mischung von Nickel und Mangan $Ni_x Mn_{1-x}$, mit $0.6 \leq x < 1$, einer Mischung von Nickel und Kobalt $Ni_x Co_{1-x}$, mit $0,6 \leq x < 1$, einer Mischung von Nickel und Titan $Ni_x Ti_{1-x}$, mit $0, 5 \leq x < 1$, mit Chrom, Nickel, Kupfer und ihren Mischungen,

oder in welchem

- das Element A aus dem A-Bereich der perovskitischen Struktur ausgewählt ist aus der Gruppe $G_A^{4'}(1)$, welche gebildet ist durch Kalzium (Ca), Strontium (Sr), Barium (Ba), Lanthan (La), Praseodym (Pr), Neodym (Nd), Wismuth (Bi), Cer (Ce) und ihren Mischungen; und

das Element B aus dem B-Bereich der perovskitischen Struktur ausgewählt ist aus der Gruppe $G_B^{4'}(1)$, welche gebildet ist aus einer Mischung von Magnesium und Eisen $Mg_x Fe_{1-x}$, mit $0,8 \leq x < 1$, und nur wenn A ausgewählt ist aus Praseodym (Pr), Wismuth (Bi), Cer (Ce) und ihren Mischungen, einer Mischung von Titan und Eisen $Ti_x Fe_{1-x}$, mit $0,8 \leq x < 1$, und nur wenn A ausgewählt ist aus Praseodym (Pr), Wismuth (Bi), Cer (Ce) und ihren Mischungen, aus Wolfram, Vanadium und Molybden und ihren Mischungen,

oder in welchem

- das Element A aus dem A-Bereich der perovskitischen Struktur ausgewählt ist aus der Gruppe $G_A^{5'}(1)$, welche gebildet ist aus Kalzium (Ca), Strontium (Sr), Barium (Ba), Lanthan (La), Praseodym (Pr), Neodym (Nd), Wismuth (Bi), Cer (Ce) und ihren Mischungen;
- und

das Element B aus dem B-Bereich der perovskitischen Struktur ausgewählt ist aus der Gruppe $G_B^{5'}(1)$, welche gebildet ist aus einer Mischung von Magnesium und Eisen $Mg_x Fe_{1-x}$, mit $0 < x \leq 0,5$, einer Mischung von Titan und Eisen $Ti_x Fe_{1-x}$, mit $0 < x \leq 0,5$, einer Mischung von Niob und Eisen $Nb_x Fe_{1-x}$, mit $0 < x \leq 0,5$, einer Mischung von Chrom und Eisen $Cr_x Fe_{1-x}$, mit $0 < x \leq 0,4$, einer Mischung von Nickel und Eisen $Ni_x Fe_{1-x}$, mit $0 < x \leq 0,4$, einer Mischung von Mangan und Eisen $Mn_x Fe_{1-x}$, mit $0 < x \leq 0,4$ und dem Eisen und ihren Mischungen,

oder in welchen

- das Element A aus dem A-Bereich der perovskitischen Struktur ausgewählt ist aus der Gruppe $G_A^{6'}(1)$, welche gebildet ist aus Kalzium (Ca), Strontium (Sr), Barium (Ba), Lanthan (La), Praseodym (Pr), Neodym (Nd), Wismuth (Bi), Cer (Ce) und ihren Mischungen,

und

- das Element B aus dem B-Bereich der perovskitischen Struktur ausgewählt ist aus der Gruppe $G_B^{6'}(1)$, welche gebildet ist aus einer Mischung von Chrom und Eisen $Cr_x Fe_{1-x}$, mit $0 < x \leq 0,4$, einer Mischung von Nickel und Eisen $Ni_x Fe_{1-x}$, mit $0 < x \leq 0,4$, einer Mischung von Mangan und Eisen $Mn_x Fe_{1-x}$, mit $0 < x \leq 0,4$, und ihren Mischungen,

oder in welchem

- das Element A aus dem A-Bereich der perovskitischen Struktur ausgewählt ist aus der Gruppe $G_A{}^{7'}(1)$, welche gebildet ist aus Kalzium (Ca), Strontium (Sr), Barium (Ba), Lanthan (La), Praseodym (Pr), Neodym (Nd), Wismuth (Bi), Cer (Ce) und ihren Mischungen;

und

- das Element B aus dem B-Bereich der perovskitischen Struktur ausgewählt ist aus der Gruppe $G_B{}^{7'}(1)$, welche gebildet ist aus einer Mischung von Magnesium und Eisen $Mg_x Fe_{1-x}$, mit $0 < x \leq 0,5$, einer Mischung von Titan und Eisen $Ti_x Fe_{1-x}$, mit $0 < x \leq 0,5$, einer Mischung von Niob und Eisen $Nb_x Fe_{1-x}$, mit $0 < x \leq 0,5$, dem Eisen und ihren Mischungen,

oder in welchem

- das Element A aus dem A-Bereich der perovskitischen Struktur ausgewählt ist aus der Gruppe $G_A{}^{8'}(1)$, welche gebildet ist aus Kalzium (Ca), Strontium (Sr), Barium (Ba), Lanthan (La), Praseodym (Pr), Neodym (Nd), Wismuth (Bi), Cer (Ce) und ihren Mischungen;

und

- das Element B aus dem B-Bereich der perovskitischen Struktur eine Mischung von Kobalt und Eisen $Co_x Fe_{1-x}$, mit $0 < x \leq 0,4$ ist.

5. Artikel nach einem der vorhergehenden Ansprüche, wobei die Mischung eine Menge von Pulver aus einem Oxyd bzw. Oxyden von perovskitischer Struktur und/oder dem Voräufer (den Vorläufern) dieser Oxyde aufweist, die größer als 3% und/oder kleiner als 6% in Massenprozent auf der Basis von Oxyden ist.

6. Artikel nach einem der vorhergehenden Ansprüche, wobei die Mischung eine Menge von Pulver von einem Oxyd (von Oxyden) mit perovskitischer Struktur und/oder dem Vorläufer, (den Vorläufern ) solcher Oxyde aufweist, die kleiner als 3% in Massenprozenten auf der Basis von Oxyden ist.

7. Artikel nach einem der vorhergehenden Ansprüche, in welchem die Perovskitquote in den "0,5 bis 10% des Oxyds (der Oxyde) mit perovskitischer Struktur und/oder dem Vorläufer (den Vorläufern) solcher Oxyde" größer als 90% ist, wobei "Perovskitquote" ausser Verunreinigungen, in Prozenten gemäß der Formel (1) definiert ist:

$$T = 100* (A_{PER})/(A_{PER} + A_{sekundäre\ Phase}) \qquad (1)$$

wobei

- $A_{PER}$ der Messbereich in einem Diagramm der Diffraktion X ist, das mittels eines Apparates vom Diffraktometertyp D 5000 der Gesellschaft BRUKER erhalten wird, welcher ausgestattet ist mit einer Röhre DX, die aus Kupfer besteht, ohne Entkonvolutionsbehandlung des Hauptpeaks oder des Hauptmulitplets der Diffraktion von Oxyden mit perovskitischer Struktur;

- $A_{sekundäre\ Phase}$ der Messbereich auf dem selben Diagramm ist, ohne Entkonvolutionsbehandlung, des Hauptpeaks oder Hauptmulitplets der Diffraktion der sekundären Phase.

8. Artikel nach einem der vorhergehenden Ansprüche, in welchem der Zirkonoxyd-Stabilisator ausgewählt ist aus der Gruppe, die durch $Y_2O_3$, $CeO_2$ und ihren Mischungen gebildet ist.

9. Artikel nach einem der vorhergehenden Ansprüche, wobei besagte Mischung eine mittler Größe von kleiner als $10\mu m$ aufweist.

10. Artikel nach einem der vorhergehenden Ansprüche, bei dem das gesinterte Teil eine Dichte von größer als 98% der theoretischen Dichte aufweist.

11. Artikel nach einem der vorhergehenden Ansprüche, in welchem das Zirkonoxyd zu mehr als 80% im Volumen in quadratischer und/oder kubischer Phase und das Komplement zu 100% als monoklinische Phase ausgebildet ist.

12. Artikel nach einem der vorhergehenden Ansprüche, in welchem:

- der Zirkonoxyd-Stabilisator ausgewählt ist aus der Gruppe, die gebildet ist aus $Y_2O_3$, $Sc_2O_3$ und ihren Mischungen und der Gehalt eines solchen Zirkonoxyd-Stabilisators kleiner als 8% ist, oder

- der Zirkonoxyd-Stabilisator ausgewählt ist aus der Gruppe, die gebildet ist aus MgO, CaO und ihren Mischungen und der Gehalt besagten Zirkonoxydsstabilisators kleiner als 4% ist, oder
- der Zirkonoxyd-Stabilisator $CeO_2$ ist und der Gehalt des besagten Zirkonoxyd-Stabilisators größer als 10% und kleiner als 15% ist, in Massenprozenten auf der Basis von Oxyden.

13. Artikel nach einem der vorhergehenden Ansprüche, in welchem der Zirkonoxyd-Stabilisator ausgewählt ist aus der Gruppe, die gebildet ist durch $Y_2O_3$, $CeO_2$ und ihren Mischungen und das Verhältnis $10\% \leq 3. Y_2O_3 + CeO_2 \leq 20\%$ in Massenprozenten auf der Basis von Oxyden respektiert.

14. Verfahren zur Herstellung eines Schmuckartikels nach einem der vorhergehenden Ansprüche, wobei das Verfahren die folgenden Schritte zur Herstellung des gesinterten Teils aufweist:

a') Mischung erster Materialien um eine Ausgangscharge zu bilden,
b') Formen einer Vorform aus der Ausgangscharge,
c') Sinterung der Vorform bei einer Temperatur, die zwischen 1200 und 1500°C liegt, derart, dass das gesinterte Teil erhalten wird,

ein Verfahren nach welchem die Ausgangscharge derart bestimmt ist, dass am Ende des Verfahrensschritts c') ein gesintertes Teil erhalten wird, welches mit einem Artikel gemäß Anspruch 4 konform ist.

15. Verfahren nach dem vorhergehenden Anspruch, in welchem, um die Farbe des gesinterten Teils nachzudunkeln:

- man vergrößert in der Ausgangscharge die zur Herstellung des gesinterten Teils bestimmt ist, die Menge des Oxyds (der Oxyde) mit perovskitischer Struktur und/oder des Vorläufers (Vorläufern) derartiger Oxyde, wobei diese Menge größer als 3% und kleiner als 9% ist, und/oder
- man fügt der Ausgangscharge, die zur Herstellung des gesinterten Teils bestimmt ist, eine Menge eines Oxyds (von Oxyden) mit perovskitischer Struktur und/oder eines Vorläufers (Vorläufern) derartiger Oxyde hinzu, wobei die Elemente A und B des Perovskits ausgewählt sind aus den Gruppen $G_A'(1)$ bis (3) und $G_B'(1)$ bis (3) wie sie in den Ansprüchen 7 bis 9 definiert sind, in einer Menge, die zwischen 0,2% und 1% liegt, in Massenprozent auf der Basis von Oxyden der Ausgangscharge.

**Claims**

1. A decorative article selected from the group consisting of a jewelry item, a watch, a bracelet, a necklace, a ring, a brooch, tie-pin, a purse, a telephone, a piece of furniture, a household utensil, a handle, a button, a panel, a visible part on consumer goods, part of a spectacle frame, an item of crockery, a frame, said article comprising a sintered part obtained from a particulate mixture having the following chemical composition, as percentages by weight based on the oxides:

- zirconia $ZrO_2$: complement to 100%;
- 0.5% to 10.0% of oxide(s) with a perovskite structure;
- 2.0% to 20.0% of a stabilizer for zirconia selected from the group consisting of $Y_2O_3$, $Sc_2O_3$, MgO, CaO, $CeO_2$, and mixtures thereof, the quantity MgO + CaO being less than 5.0%;
- less than 2.0% of a sintering additive selected from the group consisting of $Al_2O_3$, ZnO, $TiO_2$, and mixtures thereof; and
- less than 2.0% of other oxides;

the oxide(s) with a perovskite structure and/or said stabilizer and/or said sintering additive possibly being replaced, completely or in part, by an equivalent quantity of precursor(s) of said oxides.

2. An article according to claim 1, having a surface of roughness Ra that is less than 0.05 $\mu$m, or is in the range 0.1 $\mu$m to 0.5 $\mu$m.

3. An article according to any preceding claim, said mixture comprising 0.5% to 10.0%, as a percentage by weight based on the oxides, of an oxide with a perovskite structure and/or a precursor of said oxide wherein:

- the A-element at the A-site of the perovskite structure of said oxide is selected from the group $G_A(1)$ consisting of calcium, strontium, barium, lanthanum, praseodymium, neodymium, bismuth, cerium, and mixtures thereof; and

- the B-element at the B-site of the perovskite structure of said oxide is selected from the group $G_B(1)$ consisting of a mixture of cobalt and iron, a mixture of cobalt and manganese, a mixture of cobalt and chromium, a mixture of cobalt and nickel, a mixture of chromium and manganese, a mixture of chromium and nickel, a mixture of chromium and iron, a mixture of manganese and iron, a mixture of manganese and nickel, a mixture of nickel and iron, manganese, a mixture of cobalt and titanium, a mixture of cobalt and copper, cobalt, a mixture of chromium and titanium, a mixture of chromium and copper, a mixture of nickel and titanium, chromium, nickel, copper, a mixture of magnesium and iron, a mixture of titanium and iron, vanadium, tungsten, molybdenum, a mixture of niobium and iron, iron, and mixtures thereof.

4. An article according to claim 3, wherein:

- the A-element at the A-site of the perovskite structure is selected from the group $G_A'(1)$ consisting of calcium, strontium, barium, lanthanum, praseodymium, neodymium, bismuth, cerium, and mixtures thereof; and
- the B-element at the B-site of the perovskite structure is selected from the group $G_B'(1)$ consisting of a mixture of cobalt and iron $Co_x Fe_{1-x}$, with x in the range 0.2 to 0.8, a mixture of cobalt and manganese $Co_x Mn_{1-x}$, with x in the range 0.2 to 0.8, a mixture of cobalt and chromium $Co_x Cr_{1-x}$, with x in the range 0.2 to 0.8, a mixture of cobalt and nickel $Co_x Ni_{1-x}$, with x in the range 0.3 to 0.8, a mixture of chromium and manganese $Cr_x Mn_{1-x}$, with x in the range 0.2 to 0.7, a mixture of chromium and nickel $Cr_x Ni_{1-x}$, with x in the range 0.3 to 0.7, a mixture of chromium and iron $Cr_x Fe_{1-x}$, with x in the range 0.3 to 0.7, a mixture of manganese and iron $Mn_x Fe_{1-x}$, with x in the range 0.3 to 0.8, a mixture of manganese and nickel $Mn_x Ni_{1-x}$, with x in the range 0.3 to 0.8, a mixture of nickel and iron $Ni_x Fe_{1-x}$, with x in the range 0.3 to 0.7, manganese, and mixtures thereof,

Or wherein:

- the A-element at the A-site of the perovskite structure is selected from the group $G_A''(1)$ consisting of calcium (Ca), strontium (Sr), barium (Ba), lanthanum (La), praseodymium (Pr), neodymium (Nd), bismuth (Bi), cerium (Ce), and mixtures thereof; and
- the B-element at the B-site of the perovskite structure is selected from the group $G_B''(1)$ consisting of a mixture of cobalt and iron $Co_x Fe_{1-x}$, with $0.6 \leq x < 1$, a mixture of cobalt and manganese $Co_x Mn_{1x}$, with $0.6 \leq x < 1$, a mixture of cobalt and chromium $Co_x Cr_{1-x}$, with $0.6 \leq x < 1$, a mixture of cobalt and nickel $Co_x Ni_{1-x}$, with $0.6 \leq x < 1$, a mixture of cobalt and titanium $Co_x Ti_{1-x}$, with $0.5 \leq x < 1$, a mixture of cobalt and copper $Co_x Cu_{1-x}$, with $0.5 \leq x < 1$, cobalt, and mixtures thereof,

Or wherein:

- the A-element at the A-site of the perovskite structure is selected from the group $G_A'''(1)$ consisting of calcium (Ca), strontium (Sr), barium (Ba), lanthanum (La), praseodymium (Pr), neodymium (Nd), bismuth (Bi), cerium (Ce), and mixtures thereof; and
- the B-element at the B-site of the perovskite structure is selected from the group $C_B'''(1)$ consisting of a mixture of chromium and iron $Cr_x Fe_{1-x}$, with $0.6 \leq x < 1$, a mixture of chromium and manganese $Cr_x Mn_{1-x}$, with $0.6 \leq x < 1$, a mixture of chromium and cobalt $Cr_x Co_{1-x}$, with $0.6 \leq x < 1$, a mixture of chromium and nickel $Cr_x Ni_{1-x}$, with $0.6 \leq x < 1$, a mixture of chromium and titanium $Cr_x Ti_{1-x}$, with $0.5 \leq x < 1$, a mixture of chromium and copper $Cr_x Cu_{1-x}$, with $0.5 \leq x < 1$, a mixture of nickel and iron $Ni_x Fe_{1x}$, with $0.6 \leq x < 1$, a mixture of nickel and manganese $Ni_x Mn_{1-x}$, with $0.6 \leq x < 1$, a mixture of nickel and cobalt $Ni_x Co_{1-x}$, with $0.6 \leq x < 1$, a mixture of nickel and titanium $Ni_x Ti_{1-x}$, with $0.5 \leq x < 1$, chromium, nickel, copper, and mixtures thereof,

Or wherein:

- the A-element at the A-site of the perovskite structure is selected from the group $G_A^{4'}(1)$ consisting of calcium (Ca), strontium (Sr), barium (Ba), lanthanum (La), praseodymium (Pr), neodymium (Nd), bismuth (Bi), cerium (Ce), and mixtures thereof; and
- the B-element at the B-site of the perovskite structure is selected from the group $G_B^{4'}(1)$ consisting of a mixture of magnesium and iron $Mg_x Fe_{1-x}$, with $0.8 \leq x < 1$ and only if A is selected from praseodymium (Pr), bismuth (Bi), cerium (Ce), and mixtures thereof, a mixture of titanium and iron $Ti_x Fe_{1-x}$, with $0.8 \leq x < 1$ and only if A is selected from praseodymium (Pr), bismuth (Bi), cerium (Ce), and mixtures thereof, tungsten, vanadium and molybdenum, and mixtures thereof, or wherein:

- the A-element at the A-site of the perovskite structure is selected from the group $G_A^{5'}(1)$ consisting of calcium (Ca), strontium (Sr), barium (Ba), lanthanum (La), praseodymium (Pr), neodymium (Nd), bismuth (Bi), cerium (Ce), and mixtures thereof; and
- the B-element at the B-site of the perovskite structure is selected from the group $G_B^{5'}(1)$ consisting of a mixture of magnesium and iron $Mg_x Fe_{1-x}$, with $0 < x \leq 0.5$, a mixture of titanium and iron $Ti_x Fe_{1-x}$, with $0 < x \leq 0.5$, a mixture of niobium and iron $Nb_x Fe_{1-x}$, with $0 < x \leq 0.5$, a mixture of chromium and iron $Cr_x Fe_{1-x}$, with $0 < x \leq 0.4$, a mixture of nickel and iron $Ni_x Fe_{1-x}$, with $0 < x \leq 0.4$, a mixture of manganese and iron $Mn_x Fe_{1-x}$, with $0 < x \leq 0.4$, iron, and mixtures thereof.

Or wherein:

- the A-element at the A-site of the perovskite structure is selected from the group $G_A^{6'}(1)$ consisting of calcium (Ca), strontium (Sr), barium (Ba), lanthanum (La), praseodymium (Pr), neodymium (Nd), bismuth (Bi), cerium (Ce), and mixtures thereof; and
- the B-element at the B-site of the perovskite structure is selected from the group $G_B^{6'}(1)$ consisting of a mixture of chromium and iron $Cr_x Fe_{1-x}$, with $0 < x \leq 0.4$, a mixture of nickel and iron $Ni_x Fe_{1-x}$, with $0 < x \leq 0.4$, a mixture of manganese and iron $Mn_x Fe_{1-x}$, with $0 < x \leq 0.4$, and mixtures thereof,

Or, wherein:

- the A-element at the A-site of the perovskite structure is selected from the group $G_A^{7'}(1)$ consisting of calcium (Ca), strontium (Sr), barium (Ba), lanthanum (La), praseodymium (Pr), neodymium (Nd), bismuth (Bi), cerium (Ce), and mixtures thereof; and
- the B-element at the B-site of the perovskite structure is selected from the group $G_B^{7'}(1)$ consisting of a mixture of magnesium and iron $Mg_x Fe_{1-x}$, with $0 < x \leq 0.5$, a mixture of titanium and iron $Ti_x Fe_{1-x}$, with $0 < x \leq 0.5$, a mixture of niobium and iron $Nb_x Fe_{1-x}$, with $0 < x \leq 0.5$, iron, and mixtures thereof.

Or, wherein:

- the A-element at the A-site of the perovskite structure is selected from the group $G_A^{8'}(1)$ consisting of calcium (Ca), strontium (Sr), barium (Ba), lanthanum (La), praseodymium (Pr), neodymium (Nd), bismuth (Bi), cerium (Ce), and mixtures thereof; and
- the B-element at the B-site of the perovskite structure is a mixture of cobalt and iron $Co_x Fe_{1-x}$, with $0 < x \leq 0.4$.

5. An article according to any preceding claim, said mixture comprising a quantity of powder of oxide(s) with a perovskite structure and/or of precursor(s) of said oxides that is greater than 3% and/or less than 6%, as percentages by weight based on the oxides.

6. An article according to any preceding claim, said mixture comprising a quantity of powder of oxide(s) with a perovskite structure and/or of precursor(s) of said oxides that is less than 3%, as a percentage by weight based on the oxides.

7. An article according to any preceding claim, wherein the quantity of perovskite in the "0.5% to 10% of oxide(s) with a perovskite structure and/or of precursor(s) of said oxides" is greater than 90%, the "quantity of perovskite" excluding impurities, as a %, being defined by the following formula (1):

$$ T = 100*(A_{PER})/(A_{PER} + A_{secondary\ phase}) \qquad (1) $$

where

· $A_{PER}$ is the area measured on an X-ray diffraction diagram obtained using a D5000 diffractometer type instrument from the supplier BRUKER provided with a copper XRD tube, with no deconvolution treatment of the principal diffraction peak or of the principal diffraction multiplet of the oxides with a perovskite structure obtained;
· $A_{secondary\ phase}$ is the area measured on the same diagram, with no deconvolution treatment, of the principal diffraction peak or principal diffraction multiplet of the secondary phase.

8. An article according to any preceding claim, wherein the stabilizer for zirconia is selected from the group consisting

of $Y_2O_3$, $CeO_2$, and mixtures thereof.

9. An article according to any preceding claim, said mixture having a median size that is less than 10 $\mu$m.

10. An article according to any preceding claim, said sintered part having a density that is greater than 98% of the theoretical density.

11. An article according to any preceding claim, wherein more than 80% by volume of the zirconia is constituted by a quadratic and/or cubic phase, the complement to 100% being constituted by a monoclinic phase.

12. An article according to any preceding claim, wherein:

- the stabilizer for zirconia is selected from the group consisting of $Y_2O_3$, $Sc_2O_3$, and mixtures thereof and the quantity of said stabilizer for zirconia is less than 8%, or
- the stabilizer for zirconia is selected from the group consisting of MgO, CaO, and mixtures thereof and the quantity of said stabilizer for zirconia is less than 4%, or
- the stabilizer for zirconia is $CeO_2$ and the quantity of said stabilizer for zirconia is greater than 10% and less than 15%, as percentages by weight based on the oxides

13. An article accordind to any one preceding claim, wherein the stabilizer for zirconia is selected from the group consisting of $Y_2O_3$, $CeO_2$, and mixtures thereof and preferably satisfies the relationship 10%$\leq$3. Y2O3+ CeO2$\leq$20%, as percentages by weight based on the oxides

14. A method of manufacturing a decorative article according to any preceding claim, comprising the following steps of manufacturing said sintered part:

a') mixing raw materials in order to form a starting charge;
b') shaping a preform from said starting charge; and
c') sintering said preform at a temperature in the range 1200°C to 1500°C so as to obtain said sintered part;

in which method the starting charge is determined so as to obtain, at the end of step c'), a sintered part in accordance with that of an article according to claim 4.

15. A method according to the preceding claim wherein, in order to darken the color of said sintered part:

- in the starting charge intended for the manufacture of said sintered part, the quantity of oxide(s) with a perovskite structure and/or of precursor(s) of said oxides is increased, said quantity being greater than 3% and less than 9%; and/or
- a quantity of oxide(s) with a perovskite structure and/or of precursor(s) of said oxides is added to the starting charge intended for the manufacture of said sintered part, the A and B elements of said perovskite being selected from the groups $G_A$' (1) to (3) and $G_B$'(1) to (3) defined in claims 7 to 9, preferably in a quantity in the range 0.2% to 1%;

as percentages by weight based on the oxides of the starting charge.

**EP 2 448 881 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2007270304 A
- JP 2006342036 A
- JP 2005289721 A
- EP 0678490 A

**Littérature non-brevet citée dans la description**

- *Journal ofAmerican Chemical Society,* 1938, vol. 60, 309-316
- **M. I. MENDELSON.** Average Grain Size in Polycrystalline Ceramics. *J. Am. Cerm. Soc.,* vol. 52 (8), 443-446